# EUROPÄISCHE PATENTSCHRIFT

(11) **EP 2 986 455 B1**
(45) Veröffentlichungstag und Bekanntmachung des Hinweises auf die Patenterteilung: **15.07.2020**
(21) Anmeldenummer: 14717152.4
(22) Anmeldetag: 14.04.2014
(51) Int. Cl.: B41M 5/26, C03B 32/02, C03C 4/08, C03C 4/02, C03C 4/00, C03C 4/10, C03C 10/00, C03C 23/00, F24C 7/08, F24C 15/10, H05B 6/12

(54) **VERFAHREN ZUR TRANSMISSIONSÄNDERUNG VON GLASKERAMIKEN UND VERFAHRENSGEMÄSS HERSTELLBARE GLASKERAMIKARTIKEL**
METHOD FOR MODIFYING THE TRANSMISSION OF GLASS CERAMICS AND GLASS CERAMIC ARTICLES THAT CAN BE PRODUCED ACCORDING TO THE METHOD
PROCÉDÉ DE MODIFICATION DE TRANSMISSION DE VITROCÉRAMIQUES, ET ARTICLE EN VITROCÉRAMIQUE POUVANT ÊTRE PRODUIT SELON CE PROCÉDÉ

(30) Priorität: 15.04.2013 DE 102013103774; 24.09.2013 DE 102013110565
(43) Veröffentlichungstag der Anmeldung: 24.02.2016
(73) Patentinhaber: SCHOTT AG, 55122 Mainz (DE)
(72) Erfinder: HOPPE, Bernd, 55218 Ingelheim (DE); SPIER, Martin, 55124 Mainz (DE); SEILER, Daniela, 67596 Dittelsheim-Hessloch (DE); WEISS, Evelin, 55131 Mainz (DE)
(74) Vertreter: Blumbach · Zinngrebe Patentanwälte PartG mbB
(86) Internationale Anmeldenummer: PCT/EP2014/057535
(87) Internationale Veröffentlichungsnummer: WO 2014/170275

(56) Entgegenhaltungen:
- EP-A1- 1 867 613
- EP-B1- 0 233 146
- WO-A1-2012/073153
- WO-A2-2010/137000
- CN-C- 100 383 069
- DE-A1- 10 304 382
- DE-A1- 19 939 787
- DE-A1-102010 027 461
- DE-A1-102010 032 113
- DE-B4-102008 050 263
- JP-A- 2004 352 560
- US-A1- 2003 189 031
- US-A1- 2003 230 560
- US-A1- 2005 044 895
- US-A1- 2006 138 103
- XIONGWEI J ET AL: "Femtosecond laser-induced darkening in optical glasses", OPTICAL MATERIALS, ELSEVIER SCIENCE PUBLISHERS B.V. AMSTERDAM, NL, Bd. 20, Nr. 3, 1. Oktober 2002 (2002-10-01), Seiten 183-187, XP004383787, ISSN: 0925-3467, DOI: 10.1016/S0925-3467(02)00053-8

## Beschreibung

Die Erfindung betrifft ein Verfahren zur lokal begrenzt flächigen oder auch vollflächigen Veränderung der Absorptionseigenschaften von glaskeramischen Materialien über zumindest einen Teil der Dicke und/oder des Volumens des Ausgangsmaterials durch eine Behandlung mit elektromagnetischer Strahlung, so dass die Transmission über einen Teil oder vorzugsweise die gesamte Dicke des monolithischen Ausgangsmaterials in gewünschtem Maße verändert wird. Weiterhin betrifft die Erfindung Glaskeramikelemente, die mittels des erfindungsgemäßen Verfahrens herstellbar sind.

Für eine lokale Veränderung der Transmission von Bauteilen aus Glaskeramik sind bisher vier verschiedene Varianten möglich:
Zum einen kann durch das Fügen von zwei verschiedenen Materialien mit unterschiedlicher Transmission ein Bauteil erzeugt werden, welches partiell eine andere Transmission aufweist. Dabei können alle Fügeverfahren wie Löten, Schweißen und Kleben zum Einsatz kommen. Nachteilig ist dabei, dass hierbei zwei verschiedene Materialien mit unterschiedlicher Transmission benötigt werden. Diese müssen aufwändig einzeln hergestellt werden, wobei die Einstellung einer bestimmten und unterschiedlichen Transmission eine Herausforderung darstellt oder in vielen Fällen überhaupt nicht dargestellt werden kann. Die zwei verschiedenen Materialien können zudem unterschiedliche mechanische, physikalische und chemische Eigenschaften aufweisen. Dies kann im späteren Einsatzfall nachteilig sein in Bezug auf Temperaturwechselbeständigkeit, chemische Beständigkeit und mechanische Bruchfestigkeit. Außerdem ist die Fügenaht auch mit anderen physikalischen und chemischen Eigenschaften behaftet und kann sich nachteilig auf die Bauteileigenschaften auswirken. Zudem ist die Fügenaht meist optisch störend oder bildet eine Bruchausgangskante. Außerdem ist das Einfügen von geschlossenen Flächen in ein großes Bauteil oft sehr schwierig, da allseitig gefügt werden muss und Spaltmaße schwer einzuhalten sind; auch Kräfte auf die Fügenaht zur Steigerung der Haftvermittlung können nicht aufgebracht werden.

Zum anderen kann eine lokale Änderung der Transmission durch lokale Beschichtung erfolgen. Eine solche Lösung wird beispielsweise in der WO 2012/001300 A1 vorgeschlagen. Zwar wird hier nur noch ein Material im Gegensatz zum Fügeverfahren, aber dafür zusätzlich ein Beschichtungsstoff benötigt, welcher bestimmte geforderte Transmissionseigenschaften erfüllen muss. Um eine lokal höhere Transmission zu erzielen, werden die Bereiche des Bauteils beschichtet, die eine geringere Transmission haben sollen. Voraussetzung dafür ist, dass die Grundtransmission des gesamten Bauteils so hoch ist wie die höchste geforderte Transmission im fertigen Produkt. In der Praxis kann dies ebenfalls zu einem erhöhten Aufwand führen, da gegebenenfalls die Glaszusammensetzung zu ändern ist.

Auch der Aufwand für die partielle Beschichtung ist nicht zu unterschätzen, da in irgendeiner Weise maskiert werden muss. Nachteilig am Beschichtungsverfahren ist außerdem, dass eine geeignete Beschichtung zu finden ist, welche sowohl auf dem Bauteil ausreichend haftet als auch alle späteren Einsatzbedingungen des Bauteils ohne Schädigung übersteht.

Zusätzlich schafft die Beschichtung eine neue Oberfläche auf dem Bauteil mit anderen chemischen und physikalischen Eigenschaften. Dies kann beispielsweise bei Pharmaverpackungen nachteilig sein, da bei einer Innenbeschichtung ein Kontakt mit dem pharmazeutischen Produkt erfolgt. Bei einer äußeren Beschichtung eines Produktes kann es zu Kratzern oder anderweitigen Veränderungen und Beschädigungen kommen. Außerdem trägt eine Beschichtung immer auf der Oberfläche auf, was oft hinsichtlich der Haptik, Optik, Kratzanfälligkeit oder Reibung unerwünscht ist.

Auch ist zum dritten ein Verfahren zur Laserbeschriftung von keramischen Materialien, Glasuren, keramischen Gläsern und Gläsern aus der EP 0233146 B1 bekannt. Dabei werden dem zu beschriftenden Material als strahlungsempfindlicher Zusatzstoff anorganische Pigmentpartikel in Form eines "keramischen Farbkörpers" beigemischt, welcher durch die Laserbestrahlung eine andere Farbe annimmt. Da solche Pigmentpartikel in Gläsern und Glaskeramiken nur während der Schmelze zugeführt werden könnten, würden diese mit aufgeschmolzen und der Effekt wäre nicht mehr gegeben. Nur bei Keramiken, die aus Pulvern zusammengesintert werden, ist ein solches Verfahren denkbar. Auch ist ein gepulster und fokussierter Laserstrahl, welcher oberflächlich einwirkt, zwingend erforderlich, da die Keramiken nicht transparent sind. Die optimale, zur Bestrahlung auszuwählende Wellenlänge bei diesem Verfahren ist dabei diejenige, bei welcher der strahlungsempfindliche Zusatzstoff am meisten, das zu beschriftende anorganische Material dagegen am wenigsten absorbiert. Voraussetzung ist daher eine lokal unterschiedliche Absorption des Ausgangsmaterials, es müssen also lokale Absorptionspunkte in der Keramik enthalten sein, die zu einer lokal unterschiedlichen Absorption (und damit einem anderen Farbeindruck) des zu beschriftenden Ausgangsmaterials führen. Auch ist die Eindringtiefe dieser Markierung üblicherweise nicht größer als ca. 1 mm, da Keramiken im Allgemeinen opak sind.

Ein viertes Verfahren ist das Verfahren zur Laserinnenmarkierung von transparenten Gläsern und transparenten Glaskeramiken. Dabei wird mit einem gepulsten hochfokussierten Laserstrahl in einem kleinen punktförmigen Volumen (typischerweise deutlich kleiner als 1 mm³) innerhalb des Glases ein Mikroriss erzeugt und damit eine lokale Zerstörung der Struktur bzw. des Gefüges herbeigeführt. Dies führt zu einer lokalen Reflexions- bzw. Streufläche, welche auftreffendes Licht ablenkt, reflektiert oder in alle Richtungen streut und so zu einem Milchglaseffekt führt. Das Glas wird lokal transluzent, was aber nicht unbedingt zu einer Änderung der (totalen) Transmission führen muss. Der Fokus des Laserstrahls muss dabei von Punkt zu Punkt innerhalb des Glasvolumens geführt werden, um flächig oder räumlich ausgedehnte Muster zu erzeugen. Voraussetzung ist außerdem, dass das Glas oder die Glaskeramik vor der Behandlung hochtransparent ist.

Die US-amerikanische Patentanmeldung US 2005/044895 A1 beschreibt ein Verfahren zum Einfärben oder Entfärben von Glas mittels Laserstrahlung.

Der Erfindung liegt die Aufgabe zu Grunde, in einer begrenzten Fläche einer Glaskeramik auf einfache Weise eine Veränderung der Absorptionseigenschaften über zumindest einen Teil der Dicke und/oder des Volumens des Ausgangsmaterials so herbeizuführen, dass die Transmission über die gesamte Dicke des Ausgangsmaterials an einem monolithischen Bauteil verändert wird.

Dabei sollen dem monolithischen Bauteil weder zusätzliche Färbekörper in Form von anorganischen Pigmenten beigemischt werden müssen, noch soll man zusätzliche Beschichtungen oder Fügungen benötigen, um eine lokale oder vollflächige bzw. vollvolumige Transmissionsänderung zu erzeugen.

Auch sollen lokale Streuzentren im Material entfallen können, die durch lokale Zerstörung oder Veränderung der Struktur des Ausgangsmaterials erzeugt werden.

Der Einsatz eines teuren gepulsten und hochfokussierten Lasers, dessen Fokuspunkte präzise durch das Material gefahren werden muss und der nur ein extrem kleines Volumen behandeln kann, ist ebenfalls mit der Erfindung nicht mehr notwendig.

Die Nachteile einer Fügenaht, nämlich das optische Erscheinungsbild und das Vorhandensein einer oder mehrerer zusätzlicher Bauteilkanten, die zum Bruch führen können, sollen mit der Erfindung vermieden werden.

Auch sollen in einfacher Art und Weise geschlossene Flächen innerhalb einer größeren Fläche transmittiv verändert werden können, ohne ein anderes Material dafür einfügen zu müssen. Insbesondere entfällt auch die Herstellung mehrerer unterschiedlicher Ausgangsmaterialien mit unterschiedlicher Transmission.

Außerdem sollen Beschichtungen nicht mehr notwendig sein, um die Transmission lokal zu beeinflussen. Damit kann die Suche nach einem Beschichtungsstoff und einem passenden Beschichtungsverfahren entfallen. Andererseits können aber auch gegebenenfalls Beschichtungen zum Einsatz kommen, um die Transmission und/oder Farbe anzupassen oder um andere Eigenschaften, wie etwa eine Entspiegelung bereitzustellen.

Es kann auch das Beimischen von irgendwelchen partikelförmigen Zusatzstoffen entfallen, die zum Ausgangsmaterial passen und sich chemisch mit diesem vertragen müssen. Auch ein heterogener Farbeindruck des Ausgangsmaterials durch das beigemischte Pigment kann so vermieden werden.

Im Allgemeinen werden für die Erfindung im sichtbaren Wellenlängenbereich (380 nm - 780 nm) eingefärbte Materialien, wie Glaskeramiken (Grünglaszustand oder bereits keramisiert) genutzt. Typischerweise führt eine solche Färbung im sichtbaren Spektralbereich auch zu einer im Infrarot-Bereich vorhandenen Färbung.

Die Änderung der Transmission erfolgt dabei durch die lokale und zeitlich begrenzte Einwirkung von elektromagnetischer Strahlung, wie z.B. Laserstrahlung eines Dioden-Laser mit 1 µm Wellenlänge, wobei die Strahlung zu einer lokalen Aufheizung des Materials führt.

Mit der Erfindung können so vielfältige Probleme gelöst werden, beziehungsweise Produkte geschaffen werden, bei welchen:
- eine Erhöhung der Transmission von keramisierten Glaskeramiken zur Verbesserung der Displayfähigkeit und der Farbwiedergabe und der einfachen Einstellung von verschiedenen (Display-)Farben ohne Änderung der Zusammensetzung oder der Verwendung von reineren Rohstoffen erreicht werden kann,
- eine Einstellung der Grundtransmission von Glaskeramiken ohne Änderung der Zusammensetzung und der Verwendung von anderen Rohstoffen erzeugbar ist,
- eine Erhöhung der Transmission von optischen Bauteilen zur Verbesserung der Lichtleitung hergestellt werden kann,
- Volumenmäßig eingebrachte dauerhafte Markierungen ohne Schädigung der Glasmatrix erzeugbar sind,
- eine Veränderung der Transmission ohne Schädigung der Glaskeramikoberfläche, oder
- eine Veränderung der Transmission ohne Änderung des Glaskeramikvolumens hergestellt werden kann,
- eine Veränderung der Farbe von Glaskeramiken ohne den Zwang des Einsatzes eines zweiten andersfarbigen Materials ermöglicht wird.

Um eine lokale Transmissionsänderung einer Glaskeramik zu erzielen, wird die Temperatur der Glaskeramik erhöht, bis eine Transmissionsänderung eintritt. Im Anschluss wird eine vorzugsweise sehr schnelle Abkühlung durchgeführt. Die Erwärmung löst entsprechende physikalisch-chemische Reaktionen aus und/oder steigert die Elektronen- und Ionenmobilität im Ausgangsmaterial.

Demgemäß sieht die Erfindung ein Verfahren zur Herstellung eines Glaskeramikartikels beziehungsweise eines Glaskeramikelements mit lokal veränderter Transmission vor, bei welchem
- ein mit Farbzentren oder färbenden Ionen, insbesondere färbenden Metallionen, volumengefärbter Glaskeramikartikel bereitgestellt und
- lokal begrenzt auf einen Bereich der Oberfläche des Glaskeramikartikels elektromagnetische Strahlung gerichtet wird, welche im Volumen des Glaskeramikmaterials absorbiert wird, und
- wobei die Leistungsdichte der elektromagnetischen Strahlung so gewählt wird, dass sich der bestrahlte Bereich des Glaskeramikartikels aufheizt, wobei mindestens so lange aufgeheizt wird, bis im Volumen des erhitzten Bereichs der Absorptionskoeffizient und damit die Lichttransmission des Glaskeramikmaterials in zumindest einem spektralen Bereich geändert wird, und wobei
- die Einstrahlung der elektromagnetischen Strahlung nach der Aufheizung beendet wird und der bestrahlte Bereich abkühlt.

Typischerweise erfolgt die Aufheizung bis zu einer maximalen Temperatur, bei welcher die Viskosität der Glaskeramik unterhalb von 10¹⁴ dPa·s liegt. Vorzugsweise wird nicht bis zum Erweichungspunkt aufgeheizt, bei welchem die Viskosität einen Wert von 10^{7,6} dPa·s aufweist, um Formveränderungen im behandelten Bereich zu vermeiden.

Unter einer volumengefärbten Glaskeramik wird im Sinne der Erfindung ein Material verstanden, bei welchem die Farbzentren oder färbenden Ionen im Material verteilt sind. Diese sind also nicht wie bei Pigmenten lokal in Form von färbenden Kristalliten konzentriert. Entsprechend einem Farbstoff sind die farbgebenden Ionen oder Farbzentren also in der Glaskeramik gelöst, während Pigmente im Material dispergiert sind. Eine Volumenfärbung beeinflusst demgemäß zwar die Transmission, nicht aber die Streuung, wohingegen Pigmente selbst streuende Partikel darstellen. Gegebenenfalls zusätzlich vorhandene Pigmente werden aber nicht ausgeschlossen.

Mit diesem Verfahren wird ein Glaskeramikartikel beziehungsweise ein Erzeugnis mit einem volumengefärbten, monolithischen Glaskeramikelement geschaffen, welches einen ersten Bereich aufweist, in welchem die Färbung sich von einem zweiten, benachbarten Bereich unterscheidet, so dass der Absorptionskoeffizient des ersten Bereichs und damit die Lichttransmission durch den ersten Bereich verschieden ist vom Absorptionskoeffizienten und damit der Lichttransmission eines zweiten, benachbarten Bereichs, wobei die Lichtstreuung in der Glaskeramik des ersten Bereichs höchstens um absolut 20 %, vorzugsweise höchstens um absolut 10 %, besonders bevorzugt höchstens um absolut 5%, insbesondere bevorzugt höchstens um absolut 1% gegenüber der Lichtstreuung in der Glaskeramik des zweiten Bereichs höher ist. Die Lichtstreuung in der Glaskeramik des ersten Bereichs ist also im Wesentlichen gleich zur Lichtstreuung des zweiten, benachbarten Bereichs mit unveränderter Lichttransmission. Unter die Obergrenze einer höchstens um absolut 20 Prozent höheren Lichtstreuung fällt auch der Fall, dass die Lichtstreuung im ersten Bereich kleiner ist, als im zweiten Bereich. Mit der allenfalls geringfügig erhöhten Lichtstreuung tritt diese nicht als sichtbarer Effekt hervor. Die Lichtstreuung ist der Anteil der eingestrahlten Gesamtintensität abzüglich des direkt transmittierten Lichts, der Fresnel-Reflexion und Absorption Die absolute, in Prozent angegebene Erhöhung der Streuung bezieht sich auf den Anteil des gestreuten Lichts bei der Transmission eines Lichtstrahls. Beträgt der Anteil der gestreuten Lichtintensität im zweiten Bereich beispielsweise 3% der Gesamtintensität, so bedeutet eine Erhöhung um absolut 5% im ersten Bereich dann ein Anteil der gestreuten Lichtintensität im ersten Bereich von 3% + 5% = 8%. Mit anderen Worten wird mit der absoluten, in Prozent angegebenen Erhöhung der Streuung der Anstieg in Prozentpunkten angegeben. Die Begriffe der Transmission, Streuung, Absorption und Remission, wie sie im Sinne der Erfindung verwendet werden, entsprechen den Definitionen gemäß DIN 5036-1 und können mit den Messvorschriften gemäß ISO 15368 bestimmt werden.

Würde nur die Oberfläche des Materials mit dem erfindungsgemäßen Verfahren behandelt, wäre der Effekt der Absorptionsänderung und damit der Transmissionsänderung über das ganze Volumen gesehen oft nur sehr klein und meist nicht ausreichend. Deshalb ist es durch und mit dem erfindungsgemäßen Verfahren durch die Auswahl einer Wellenlänge der Strahlung derart, dass diese im Volumen des Materials absorbiert wird, möglich, nicht nur die Oberfläche sondern simultan zumindest einen bestimmten Bereich des Volumens der Glaskeramik aufzuheizen und zu verändern, um den Effekt groß genug zu machen, so dass er dem der Anwendung gewünschten Maße entspricht und um die Oberfläche des Materials während der Behandlung nicht zu überhitzen.

Wie bereits gesagt, wird für die lokale Aufheizung des Glaskeramikmaterials vorzugsweise ein Laser verwendet. Mit einem Laserstrahl kann die Strahlungsleistung lokal eng begrenzt im Material eingebracht werden.

Ein weiteres wichtiges Merkmal der Erfindung ist die Tatsache, dass die Wellenlänge der Einstrahlung nicht der Wellenlänge des erzielten Effektes, also der Wellenlänge, bei welcher die Transmissionsänderung auftritt, entsprechen muss. Bei der vorliegenden Erfindung ist es also möglich, beispielsweise im infraroten Wellenlängenbereich bei 1µm Wellenlänge einzustrahlen, weil in der Glaskeramik in diesem Wellenlängenbereich eine Absorptionsbande vorhanden ist. Der resultierende Effekt kann aber beispielsweise im sichtbaren Bereich zwischen 380 nm und 780 nm liegen und eine Änderung der Transmission bei einer oder mehreren Wellenlängen in diesem Bereich durch physikalisch-chemische Reaktionen der in der Glaskeramik vorhandenen Elemente und Verbindungen hervorrufen. Dies ist aus der Tatsache geschuldet, dass die eingestrahlte Energie zwar nur mit bestimmten Elementen der Glaskeramik wechselwirkt aber Auswirkungen auf die gesamte Struktur der Glaskeramik hat. Um eine lokale Transmissionsänderung zu erzielen, wird also dazu auch lokal im Volumen eine Temperaturerhöhung hervorgerufen. Dies erfolgt durch elektromagnetische Strahlung in einem Wellenlängenbereich, in welchem die Glaskeramik eine Teildurchlässigkeit für die auftreffende elektromagnetische Strahlung hat. Damit wird nicht nur oberflächlich sondern über die gesamte Dicke oder in einem Teilvolumen des Glaskeramikelements Energie eingebracht. Ist das Produkt aus Strahlungsdichte und Absorption hoch genug, dann kommt es zu einer (lokalen) schockartigen Temperaturerhöhung und damit zu einer Veränderung der Transmission. Ist das Produkt zu groß wird nur die Oberfläche erwärmt und damit überhitzt und der Effekt im Volumen wird nicht groß genug ohne das Material zu schädigen. Ist das Produkt zu klein, dann wird zu langsam erwärmt und der Effekt tritt entweder nicht auf oder ist nicht mehr lokal eindeutig zu begrenzen, d.h. verschmiert.

Gemäß einer Weiterbildung der Erfindung wird daher die Strahlungsdichte, beziehungsweise Leistungsdichte der elektromagnetischen Strahlung und/oder der Absorptionskoeffizient α des Glaskeramikmaterials so gewählt, dass das Produkt P der Leistungsdichte und des Absorptionskoeffizienten α mindestens P = 0,25 (W/mm³)·(1/mm) beträgt. Der Absorptionskoeffizient sollte dabei zur Vermeidung einer nur oberflächlichen Erwärmung gemäß noch einer Weiterbildung der Erfindung höchstens 2/d betragen, wobei d die Dicke des Glaskeramikelements bezeichnet.

Der Effekt der Änderung des Absorptionsverhaltens und damit resultierend der Transmission resultiert wahrscheinlich aus Redox-Reaktionen von färbenden Elementen im Material oder durch Auflösung von zuvor eingebrachten Farbzentren (z.B. durch Solarisationseffekte oder andere extrem kurzwellige Strahlungsenergie). Durch die Wahl der Strahlungsquelle und die Form der Einbringung der Energie kann der Bereich der Transmissionsänderung von punktförmig über linienförmig bis zu flächig sein. Dabei meint punktförmig nur die geometrische Abbildung des Laserstrahls auf der Oberfläche, jedoch nicht die Fokussierung in Form eines räumlichen Punktes. Über die Dicke des Materials kann also die Form ein Zylinder oder ein Kegel mit spitzem Winkel sein. Bei einer punktförmigen Einbringung der Energie kann durch Bewegung der Strahlungsquelle oder Bewegung des Bauteils der Bereich der Transmissionsänderung eine beliebige Form annehmen, z.B. Buchstaben, Zeichen oder auch Dreiecke, Vierecke oder beliebige andere geometrische Formen. Die Abmaße der Bereiche mit Transmissionsänderung können von Durchmesser 0,1 mm bis zu einer Fläche von mehreren Quadratmetern variieren. Die Höhe der Transmissionsänderung kann additiv zum ursprünglichen Transmissionsgrad um absolut 0,1% bis um mehr als absolut 50% höher sein. Vorzugsweise wird, insbesondere bei dunkel gefärbten Glaskeramiken, die Transmission im sichtbaren Spektralbereich im ersten Bereich gegenüber dem zweiten, benachbarten Bereich um mindestens einen Faktor 2 erhöht.

Wie bereits oben erwähnt, wird eine schnelle Abkühlung bevorzugt. Dies ist günstig, um die Ionenmobilität nach der Aufheizung schnell zu reduzieren und damit den Effekt der Farbänderung einzufrieren oder zu verhindern, dass bei der Aufheizung erfolgte Redox-Reaktionen sich wieder umkehren. Gemäß der Erfindung ist daher vorgesehen, dass die Glaskeramik nach der Erwärmung mit einer Abkühlrate von mindestens 1 K pro Sekunde, vorzugsweise zumindest 5 K pro Sekunde, besonders bevorzugt zumindest 10 K pro Sekunde zumindest innerhalb eines Temperaturbereichs von der Maximaltemperatur bis 100 K unterhalb der Maximaltemperatur abgekühlt wird.

Gemäß einer Ausführungsform der Erfindung wird die Erwärmung oder der Glaskeramik mittels der elektromagnetischen Strahlung so durchgeführt, dass die Oberfläche des Glaskeramikartikels kühler bleibt als unter der Oberfläche liegende Bereiche des Volumens. Das Volumen erreicht so zeitlich vor den Oberflächen die nötige Prozesstemperatur. Der Prozess kann vor einem Erweichen/Ausweichen der Oberflächen beendet werden. Auf diese Weise bleiben die Oberflächen starr, und es entstehen keine bleibende plastische Verformung und keine oder betragsmäßig geringere Zugspannungen.

Eine Möglichkeit hierzu ist, wenn auch während der Aufheizung durch die elektromagnetische Strahlung eine Kühlung der Oberfläche des Glaskeramikartikels durchgeführt wird. Insbesondere wird dabei eine Kühlung verstanden, die einen größeren Wärmetransport bewirkt als die ansonsten vorhandenen Wärmeverluste durch Wärmestrahlung und Wärmeleitung. Eine Kühlung erfolgt durch Kontakt der Oberfläche mit einem wärmeabführenden Fluid beziehungsweise einem Kühlfluid. Besonders bevorzugt wird dabei ein über die Oberfläche fließender Fluidstrom. Die Kühlung kann auf einer Seite des Glaskeramikartikels oder auch auf beiden Seiten erfolgen. Geeignet ist beispielsweise Wasser oder ein Wasser-Ethanol-Gemisch. Ein solches Gemisch absorbiert Infrarotstrahlung weniger als Wasser.

Mit einer solchen Kühlung während des Aufheizens können gegebenenfalls Oberflächenverwerfungen oder eine Volumenexpansion vermieden oder zumindest reduziert werden. Es können gemäß noch einer Weiterbildung der Erfindung Druckspannungszonen im oberflächennahen Bereich erzeugt werden, oder es wird das Ausbilden von höheren Zugspannungen verhindert, da die Dehnung an der Oberfläche reduziert oder vermieden wird.

Gemäß noch einer Weiterbildung der Erfindung kann ein thermischer Nachbehandlungsschritt nach der Abkühlung vorgesehen werden. Mit einem solchen Nachbehandlungsschritt können durch die Aufheizung zuvor induzierte Zugspannungen wieder abgebaut werden. Auch ist eine individuelle Feineinstellung der erzeugten Transmission durch einen thermischen Nachbehandlungsschritt möglich.

Mögliche Varianten der thermischen Nachbehandlung sind:
- Ein zweiter Aufheizschritt mittels elektromagnetischer Strahlung, vorzugsweise mittels eines Lasers, der das Volumen auf eine Entspannungstemperatur aufheizt und dort hält.
- Ein zweiter Aufheizschritt mittels elektromagnetischer Strahlung, vorzugsweise mittels eines Lasers, der nur die Oberfläche/n aufheizt und dort Spannungen abbaut. Dies kann günstig sein, da oberflächennahe Spannungen wesentlich kritischer sind als Spannungen im Volumen. Um eine solche mehr oberflächliche Erwärmung zu erzielen, kann für den zweiten Aufheizschritt elektromagnetische Strahlung verwendet werden, die andere Wellenlängen aufweist als die elektromagnetische Strahlung des ersten Aufheizschritts.
- Ein thermisches Nachwärmen und Entspannen im konventionellen Ofen, beispielsweise in einem Kühlofen.

Als Strahlungsquellen können UV-Strahlungsquellen, IR Strahler mit Wolframwendel, Laserquellen wie z.B. Dioden-Laser, Faser-Laser oder auch andere Strahlungsquellen zum Einsatz kommen. Die Wahl der richtigen Strahlungsquelle richtet sich nach dem Absorptionsvermögen der zu behandelnden Glaskeramik im Bereich der Wellenlänge der Strahlungsquelle. Für keramisierte Ceran-Glaskeramiken eignen sich z.B. Diodenlaser mit einer Wellenlänge im Bereich von 1 µm. Bei dieser Wellenlänge beträgt die Transmission einer 4 mm dicken Ceranplatte zwischen 50% und 80%, so dass genügend viel Strahlung durch die gesamte Dicke der Platte dringt, um diese homogen über die Dicke der Platte an der Stelle der Energieeinbringung aufzuheizen. Bei einer genügend hohen Leistung kann somit innerhalb weniger Sekunden eine Temperatur an der Stelle der Energieeinbringung von größer 700 °C erzielt werden.

Allgemein wird bevorzugt, dass die Glaskeramik mit einer Temperaturänderungsrate von mindestens 250 K pro Minute aufgeheizt wird. Die schnelle Aufheizung stellt sicher, dass die Bereiche mit veränderter Farbgebung scharf abgegrenzt werden können, beziehungsweise scharfe Konturen aufweisen. Auch wird eine unerwünschte Keimbildung oder bei Gläsern eine Kristallisation unterdrückt.

Geht man davon aus, dass der Effekt der Änderung des Absorptionskoeffizienten, beziehungsweise der Farbänderung alleine durch die Temperaturanhebung im Glaskeramikmaterial erfolgt, wären prinzipiell neben einer Strahlungsaufheizung auch andere Arten des Energieeintrags, wie etwa eine lokale Aufheizung mit einem Gasbrenner denkbar, um eine Farbänderung zu erzielen. Allerdings wird die erfindungsgemäße schnelle Aufheizung mit einer in das Material eindringenden elektromagnetischen Strahlung bevorzugt, um eine schnelle Aufheizung des Volumens unter der bestrahlten Oberfläche zu erzielen. Damit können scharfe Konturen der Bereiche mit geänderter Farbgebung erreicht werden. Bei einer nur oberflächlichen Bestrahlung breitet sich die Wärme seitlich entlang der Oberfläche im Wesentlichen genau so schnell aus, wie in Richtung von der Oberfläche weg in das Volumen hinein. Wird also bei nur oberflächlicher Erhitzung eine Farbänderung des Volumens unterhalb der Oberfläche oder insbesondere sogar des gesamten Bereichs zwischen zwei Seitenflächen einer Glaskeramikplatte hergestellt, ergeben sich entsprechend unscharfe Kanten des farbgeänderten Bereiches.

Nach Abkühlung der Platte auf Raumtemperatur ist an der Stelle der Energieeinbringung die Transmission höher als vor der Strahlungsbehandlung. Der Bereich der Energieeinbringung kann sowohl über die Formung der Einstrahlung der Energie erfolgen als auch über eine zusätzliche Maskierung der zu behandelnden Platte, so dass nicht zu verändernde Teile der Glaskeramik wirksam vor dem Auftreffen von Strahlung geschützt werden.

Der Vorteil dieses Verfahrens gegenüber dem Stand der Technik ist die Tatsache, dass ein monolithisches Bauteil verwendet werden kann und Anpassungen der Zusammensetzung, Fügungen oder Beschichtungen nicht notwendig sind. Das Verfahren ist sehr schnell durchführbar (im Sekundenbereich), hoch flexibel und extrem gut anpassbar an verschiedenste Geometrien und Anwendungen. Auch dreidimensional verformte Bauteile können behandelt werden.

Das Verfahren gemäß der Erfindung eignet sich sehr gut dazu, die Färbung eines mit Vanadiumoxid volumengefärbten Glaskeramik-Artikels lokal abzuschwächen. Demgemäß wird hierbei in dem lokalen ersten Bereich die Lichttransmission im sichtbaren Spektralbereich zwischen 380 Nanometern und 780 Nanometern durch die Erhitzung angehoben, der Absorptionskoeffizient mithin abgesenkt. Auf diese Weise können in einfacher Weise beispielsweise Fenster mit höherer Transmission in einem ansonsten dunkel erscheinenden Glaskeramik-Kochfeld erzeugt werden. Unter einem solchen Fenster kann dann eine Anzeige angebracht werden, welche für den Betrachter gut sichtbar leuchtet. Unter einem Fenster als besonders bevorzugter Form eines mit dem erfindungsgemäßen Verfahren hergestellten farbveränderten Bereichs wird ein Bereich verstanden, der von mindestens drei Seiten oder zu mindestens 50% seines Umfangs von benachbarten, nicht aufgehellten zweiten Bereichen umgeben ist. Vorzugsweise ist der erste Bereich vollständig von zweiten Bereichen, beziehungsweise nicht farbgeändertem Glaskeramikmaterial umgeben.

Allgemein ist es auch sinnvoll, nicht den überwiegenden Anteil der Fläche des Glaskeramikartikels in seiner Farbe zu verändern, also beispielsweise aufzuhellen, da es in diesem Fall einfacher wäre, ein entsprechend anders gefärbten Artikel bereitzustellen und dann lokal einen begrenzten Bereich in seiner Färbung zu verändern. Gemäß einer Ausführungsform der Erfindung ist daher vorgesehen, dass der Flächenanteil des oder der ersten Bereiche an einer Seite des Glaskeramikartikels zusammengenommen höchstens ein Drittel der Fläche dieser Seite einnimmt. Sind mehrere aufgehellte Bereiche vorhanden, so gilt gemäß dieser Ausführungsform der Erfindung vorzugsweise, dass die summierte Fläche aller dieser Bereiche höchstens ein Drittel der Fläche einer Seite des Glaskeramikartikels einnimmt.

Gemäß einer Ausführungsform der Erfindung wird damit ein Erzeugnis mit einem mit Vanadiumoxid volumengefärbten Glaskeramikelement hergestellt, bei welchem im ersten Bereich die integrale Lichttransmission im sichtbaren Spektralbereich gegenüber einem zweiten, benachbarten und nicht erfindungsgemäß behandelten Bereich angehoben ist. Unter der integralen Lichttransmission wird dabei die über einen Wellenlängenbereich, wie etwa den sichtbaren Spektralbereich zwischen 380 und 780 Nanometern Wellenlänge gemittelte spektrale Lichttransmission verstanden. Die spektrale Lichttransmission ist die Lichttransmission bei einer bestimmten Wellenlänge. Sofern nicht von der spektralen Lichttransmission gesprochen wird, ist mit dem Begriff der Lichttransmission im Sinne dieser Beschreibung eine integrale Lichttransmission zu verstehen.

Die Erfindung, beziehungsweise erfindungsgemäße Glaskeramikartikel können in den Bereichen Faseroptik, Pharmaverpackung, Haushaltsgeräte, Optik, Flachglas, u.a., insbesondere interessant sein für folgende Anwendungen:
- Verbesserung der Eignung von stark gefärbten Produkten (z.B. volumengefärbte Glaskeramik-Kochflächen) durch lokale Erhöhung der Transmission für optische Anzeigen im Bereich der unter dem Produkt verbauten Anzeigen,
- Einbringen eines 1D (Balken) oder 2D (Dot Matrix) Barcodes in die Wand (z.B. eines Vials / einer Spritze) zur dauerhaften Kennzeichnung,
- Einbringen einer Füllmengenskala oder Füllhöhenmarkierung oder einer anderen Markierung in die Wand eines Behälters (z.B. einem Vial, einem Rohr oder einer Spritze),
- Einbringen von optischen Designelementen in Flachgläser (z.B. Architekturverglasung) wie Firmenlogos oder geometrische Objekte (Pfeile als Wegweiser, Fluchtweg),
- dauerhafte fälschungssichere Markierung von Produkten durch ein Logo im Volumen der Glaskeramik,
- Einbringen von Piktogrammen, Buchstaben, geometrischen Objekten in Touch-Anwendungen für Mobiltelefon-Abdeckungen oder anderen elektronischen Geräten,
- lokale Veränderung der Lichtführung und -leitung zu optischen Zwecken wie Strahlführung in optischen Systemen, Lichtfallenbegrenzung zur Absorption von Streustrahlung,
- Verbesserung der Grundtransmission von optischen Gläsern zur Verringerung der Streuung und Erhöhung der Gesamttransmission von Linsen und optischen Systemen,
- Erzeugung von scharf abgegrenzten "Lichtschlitzen" oder Lichtfenstern in Beleuchtungsanwendungen (z.B. für Armaturenbrettbeleuchtungen in Automobilen o.ä.).

Die Erfindung wird nachfolgend anhand von Ausführungsbeispielen und der beigeschlossenen Figuren näher erläutert. Dabei verweisen in den Figuren gleiche Bezugszeichen auf gleiche oder entsprechende Elemente.

Es zeigen:
Fig. 1 und Fig. 2 Vorrichtungen zur Durchführung des erfindungsgemäßen Verfahrens,
Fig. 3 Röntgenbeugungsspektren an einem aufgehellten und einem unveränderten Bereich einer volumengefärbten Glaskeramik,
Fig. 4 den spektralen Transmissionsgrad eines behandelten und eines unbehandelten Bereichs einer Glaskeramik-Platte,
Fig. 5 den Absorptionskoeffizient eines behandelten und eines unbehandelten Bereichs einer Glaskeramik-Kochfläche in Abhängigkeit von der Wellenlänge,
Fig. 8 ein Glaskeramik-Kochfeld mit einer erfindungsgemäßen Glaskeramikplatte und
Fig. 9 einen Glaskeramikartikel mit einer Flachfacette.

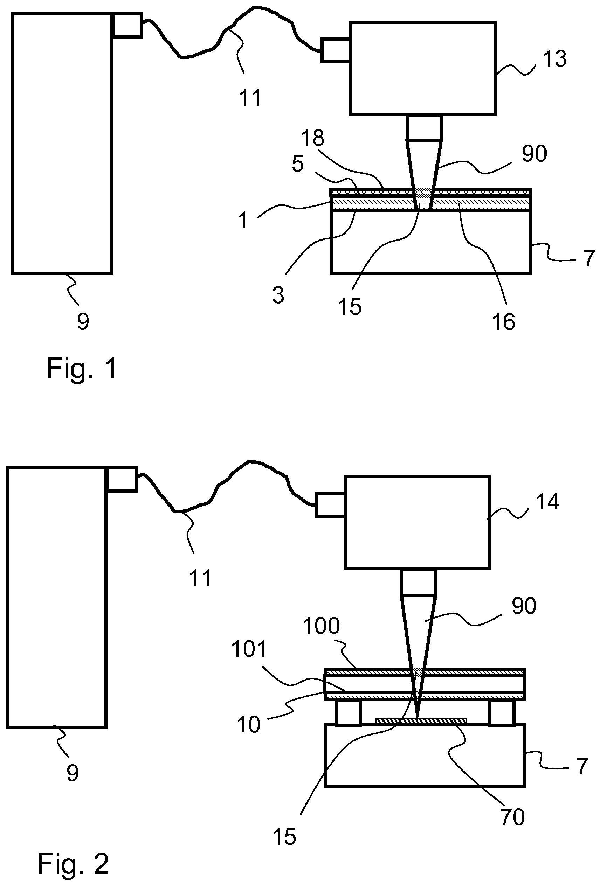

Das erfindungsgemäße Verfahren zur Herstellung eines Glaskeramikartikels mit lokal veränderter Transmission wird anhand von Fig. 1 näher erläutert. Es wird eine keramisierte Glaskeramikplatte 1 mit einer ersten Seite 3 und einer zweiten Seite 5 und den Abmessungen 50 mm x 50 mm und 4 mm Dicke bereitgestellt. Die Glaskeramikplatte 1 kann, wie dies üblich ist, einseitig genoppt ausgeführt sein. Insbesondere ist die Glaskeramikplatte volumengefärbt durch färbende Metallionen. Solche Metallionen können beispielsweise Mangan, Eisen-, Seltenerd-, wie insbesondere Cer-, Chrom-, Nickel-, Kobalt- oder Vanadiumionen sein. Die färbende Wirkung dieser Ionen kann dabei auch von einer Wechselwirkung mit weiteren Bestandteilen der Glaskeramik abhängig sein. So kann die Färbung durch Wechselwirkung mit anderen Metallionen verstärkt oder umgekehrt auch abgeschwächt werden. Mangan-und Eisenionen zeigen beispielsweise eine Wechselwirkung mit Zinn und/oder Titan, weshalb vorzugsweise Mangan- oder Eisenoxid als Färbemittel, vorzugsweise in Verbindung mit Zinnoxid und/oder Titanoxid, in der Zusammensetzung eingesetzt wird. Färbende Ionen seltener Erden, wie insbesondere Cer-Ionen wechselwirken mit Ionen von Chrom, Nickel und Kobalt. Vorzugsweise werden Oxide seltener Erden als Färbemittel daher in Verbindung mit Oxiden der vorgenannten Metalle in der Glaskeramik-Zusammensetzung eingesetzt. Auch bei Vanadium kann eine Wechselwirkung mit Zinn, Antimon oder Titan vermutet werden.

Allgemein, ohne Beschränkung auf die speziellen Ausführungsbeispiele weist daher die Glaskeramik Ionen zumindest eines der folgenden Metalle oder Kombinationen von Ionen der folgenden Metalle auf:
- Vanadium, insbesondere zusammen mit Zinn und/oder Titan
- Seltene Erden, insbesondere Cer, zusammen mit Chrom und/oder Nickel und/oder Kobalt,
- Mangan zusammen mit Zinn und/oder Titan,
- Eisen zusammen mit Zinn und/oder Titan.

Vanadiumoxid stellt ein sehr starkes Färbemittel dar. Eine starke Färbung erfolgt dabei im Allgemeinen erst bei der Keramisierung. Es hat sich gezeigt, dass mittels der Erfindung eine Volumenfärbung durch Vanadiumoxid wieder zumindest teilweise rückgängig gemacht werden kann. Um für den Fall einer mit Vanadiumoxid gefärbten Glaskeramik einen deutlich sichtbaren Effekt zu erzielen, ist daher ohne Beschränkung auf das Ausführungsbeispiel gemäß einer Ausführungsform der Erfindung vorgesehen, dass die Glaskeramik mindestens 0,005 Gewichtsprozent, vorzugsweise mindestens 0,01 Gewichtsprozent, besonders vorzugsweise mindestens 0,03 Gewichtsprozent Vanadiumoxid enthält. Dies verursacht eine hinreichend starke Färbung und entsprechend eine deutliche Transmissionsänderung im lokal aufgehellten Bereich 15.

Die Glaskeramikplatte 1 wird auf einer im Schlickerguss hergestellten Siliziumoxid-Keramikunterlage 7 mit 100 mm x 100 mm und 30 mm Dicke platziert. Die auf der Siliziumoxid-Keramikunterlage 7 aufliegende erste Seite 3 ist beispielsweise die glatte Oberseite der Glaskeramikplatte 1. Die nach oben weisende zweite Seite 5 ist dann die genoppte Unterseite.

Generell kann es günstig sein, wie auch bei diesem Beispiel, die elektromagnetische Strahlung auf der später benutzerabgewandten Seite einzustrahlen. Bei einem Glaskeramik-Kochfeld ist typischerweise eine Seite der Glaskeramikplatte genoppt und bildet die dem Benutzer abgewandte Seite. Günstig ist die Einstrahlung auf die dem Benutzer abgewandten Seite, da die der Strahlungsquelle zugewandte Seite tendenziell wärmer wird und dies zu Oberflächenveränderungen führen kann. Solche Veränderungen sind auf der benutzerabgewandten Seite weniger störend.

Siliziumoxid-Keramikunterlage 7 und Glaskeramikplatte 1 sind auf Raumtemperatur. Über dieser Anordnung ist ein Laser-Scanner 13 mit einer fokussierenden Optik, Brennweite 250 mm, so installiert, dass der Laserstrahl 90 senkrecht zur Oberfläche der Glaskeramikplatte 1 auftrifft. Im Fokus beträgt der Durchmesser des Laserstrahls 90 1,5 mm. Die Anordnung aus Siliziumoxid-Keramikunterlage 7 und Glaskeramikplatte 1 wird in einer solchen Entfernung platziert, dass die Glaskeramikplatte 1 nicht im Fokus des Laserstrahls 90 liegt und der Laserstrahl mithin defokussiert ist. Im Ausführungsbeispiel weist der Laserstrahl 90 auf der Glaskeramikplatte 1 einen Durchmesser von 10 mm auf. Über eine Übertragungsfaser 11 wird dem Laserscanner 13 Laserstrahlung eines Lasers 9 mit einer Wellenlänge zwischen 900 nm und 1100 nm zugeführt. Als Laser 9 dient dabei ein Diodenlaser, beispielsweise der Firma laserline, die eine regelbare Leistung zwischen 0 W und 3000 W liefert. Nach Aktivierung des Lasers 9 wird die Glaskeramikplatte 1 mit einer Leistung von 1000W und einer Dauer von 10 Sekunden lokal bestrahlt. Die Glaskeramik heizt sich dadurch mit einer Rate von mehr als 250 K pro Minute auf, wobei innerhalb der Bestrahlungsdauer die Temperatur überschritten wird, bei welcher eine Erhöhung der integralen Lichttransmission des Glaskeramikmaterials auftritt. Typischerweise liegt bei dieser Temperatur die Viskosität der Glaskeramik bei einem Wert von kleiner 10¹⁴ dPa·s. Danach wird der Laser abgeschaltet und die Glaskeramikplatte kühlt an Luft ab. Die so erzielte Abkühlrate liegt zumindest innerhalb eines Temperaturbereichs von der Maximaltemperatur bis 100 K unterhalb der Maximaltemperatur, vorzugsweise bis zur Temperatur, bei welcher die Viskosität der Glaskeramik einen Wert von 10¹⁴ dPa·s aufweist, bei mehr als 1 K pro Sekunde, im Allgemeinen sogar bei mehr als 5 K pro Sekunde oder mehr als 10 K pro Sekunde. Damit wird der Farbänderungs-, insbesondere hier der Aufhellungseffekt eingefroren. Im lokalen Bereich 15, welcher durch den Laserstrahl 90 erwärmt wurde, ist die Transmission lokal über die gesamte Dicke der Platte deutlich höher geworden, d.h. sichtbare Strahlung kann besser durch die Glaskeramikplatte 1 gelangen. Benachbarte Bereiche 16 der Platte, beziehungsweise der übrige Teil der Glaskeramikplatte 1 bleibt dunkel, d.h. behält seine geringe Transmission im sichtbaren Bereich. Die Glaskeramikplatte 1 ist außerdem geometrisch unverändert, insbesondere auch im Bereich 15 der Einstrahlung. Dies betrifft sowohl die Ebenheit als auch lokale Dickenschwankungen.

Mittels eines Laserscanners kann der Laserstrahl gemäß einer weiteren Ausführungsform auch über die Oberfläche des Glaskeramikartikels gerastert werden, so dass ein Bereich 15 aufgeheizt wird, dessen Oberfläche größer ist als der Lichtfleck des Laserstrahls auf der Oberfläche des Glaskeramikartikels.

Gemäß der Erfindung wird der Glaskeramikartikel während der Bestrahlung, beziehungsweise der Aufheizung gleichzeitig oberflächlich gekühlt. Dazu wird ein Kühlfluid 18 in Kontakt mit der Oberfläche des Glaskeramikartikels gebracht. Das Kühlfluid 18 kann dabei auch über die Oberfläche des Glaskeramikartikels fließen, um den Kühleffekt zu verstärken. Bei dem in Fig. 1 gezeigten Ausführungsbeispiel ist speziell ein Film des Kühlfluids 18 auf der bestrahlten zweiten Seite 5 der Glaskeramikplatte 1 vorgesehen. Dieser kann, beispielsweise indem die Seite 5 schräg angeordnet und/oder fortlaufend Kühlfluid 18 zugeführt wird, in einfacher Weise auch zum Fließen über die Oberfläche, beziehungsweise entlang der zweiten Seite 5 gebracht werden. Anders als in Fig. 1 gezeigt, kann auch eine Anordnung vorgesehen werden, bei welcher beide Seiten 3, 5 Kontakt mit einem Kühlfluid 18, vorzugsweise einem fließenden Kühlfluid 18 haben. Geeignet ist ein Ethanol/Wasser-Gemisch. Allgemein, ohne Beschränkung auf das dargestellte Ausführungsbeispiel wird dabei bevorzugt, dass der Ethanol-Gehalt des Gemisches 50 Volumenprozent nicht übersteigt. Ein solches Gemisch ist von Vorteil, da dieses weniger Infrarotstrahlung absorbiert als reines Wasser. Mit dem Kühlfluid können Veränderungen der Oberfläche, wie Verwerfungen oder Aufwölbungen, vermieden oder wenigstens reduziert werden. Auch können die Eigenschaften des Glaskeramikartikels 1 durch die gleichzeitige Kühlung während der Bestrahlung positiv beeinflusst werden. Es können gemäß noch einer Weiterbildung der Erfindung Druckspannungen an der Oberfläche erzeugt werden. Zumindest können auch hohe Zugspannungen an der Oberfläche nach dem Bestrahlen und Abkühlen verhindert oder verringert werden. Allgemein kann daher ein Glaskeramikelement hergestellt werden, bei welchem im erfindungsgemäß behandelten ersten Bereich 15 die Spannung an der Oberfläche niedriger ist, als in der Mitte des Volumens des ersten Bereichs 15. Der Begriff einer niedrigeren Spannung wird dabei nicht betragsmäßig, sondern mit Vorzeichen verstanden. So kann die Oberfläche nahezu spannungsfrei sein, während in der Mitte des Volumens eine Zugspannung, also eine Spannung mit positivem Vorzeichen vorliegt. Auch hierbei ist die Spannung an der Oberfläche höher, da die Spannung im Inneren positiv ist.

Dem Ausführungsbeispiel ist weiterhin gemein, dass sich der erste Bereich 15 mit der sich von einem benachbarten Bereich unterscheidenden Transmission, insbesondere einer höheren Transmission im ersten Bereich, von einer ersten bis zu einer zweiten, gegenüberliegenden Oberfläche des Glaskeramikelements erstreckt. Dies wird durch das Durchdringen der elektromagnetischen Strahlung durch das Element und damit einer Aufheizung des gesamten Glaskeramikmaterials zwischen den beiden gegenüberliegenden Seiten erzielt. Bei dem Ausführungsbeispiel erstreckt sich der erste Bereich von der ersten Seite 3 als erste Oberfläche bis zur zweiten Seite 5 als zweiter Oberfläche. Es ist aber auch möglich, eine Transmissionssteigerung zur Verbesserung der Sichtbarkeit von Anzeigen zu erzielen, wenn nicht das gesamte Volumen zwischen den beiden Oberflächen, sondern nur eine Schicht, etwa mit einer Schichtdicke entsprechend der halben Dicke der Glaskeramikplatte aufgehellt wird. Selbstverständlich können mit dem erfindungsgemäßen Verfahren allgemein auch mehrere Bereiche 15 im Glaskeramikelement erzeugt werden.

Für das Verfahren ist es in Weiterbildung der Erfindung generell, ohne Beschränkung auf die speziellen Ausführungsbeispiele der Fig. 1, günstig, wenn eine Einrichtung vorgesehen wird, welche die elektromagnetische Strahlung, die durch den Glaskeramikartikel transmittiert ist, in den Glaskeramikartikel zurückreflektiert. Insbesondere kann dazu der Glaskeramikartikel auf einer Unterlage 7 gelagert werden, welche die elektromagnetische Strahlung in das Glaskeramikmaterial zurückreflektiert.

Durch die Reflexion kann die Effizienz und Geschwindigkeit des Aufheizvorgangs gesteigert und damit auch die Prozesszeit verkürzt werden. Wird, wie auch bei dem in Fig. 1 gezeigten Beispiel, ein Infrarotlaser verwendet, kann insbesondere eine im Bereich der Laserstrahlung von 0,9 µm bis 1,1 µm Wellenlänge reflektierende Unterlage 7 verwendet werden.

Wird, wie bei dem in Fig. 1 gezeigten Beispiel, eine im Schlickerguss hergestellte Siliziumoxid-Keramikunterlage 7 verwendet, kann hierzu eine entsprechend feinkörnige Siliziumoxid-Keramik verwendet werden. Allgemein wird dabei ohne Beschränkung auf Siliziumoxid-Keramiken in Weiterbildung der Erfindung bevorzugt, wenn die mittlere Korngröße einer Keramik, vorzugsweise der genannten schlickergegossenen SiO₂-Keramik, die als Unterlage 7 für den Glaskeramikartikel verwendet wird, kleiner als die Wellenlänge der elektromagnetischen Strahlung ist. Damit wird eine starke Streuung der Strahlung an der Oberfläche der Unterlage 7 vermieden. Bei breitbandigen Strahlungsquellen sollte dann die mittlere Korngröße der Keramik kleiner als die Wellenlänge der maximalen spektralen Leistungsdichte der durch das Glaskeramikmaterial transmittierten Strahlung oder alternativ die mittlere Wellenlänge des Spektrums der durch das Glaskeramikmaterial transmittierten Strahlung sein.

Gemäß einer anderen Weiterbildung der Erfindung kann anstelle einer keramischen Oberfläche, wie etwa der Siliziumoxid-Keramikunterlage 7 gemäß Fig. 1, auch eine metallisch reflektierende Unterlage 7 eingesetzt werden. Geeignet sind beispielsweise Aluminium oder poliertes Kupfer. Diese Ausführungsform kann selbstverständlich auch mit einer Keramik-Unterlage 7 kombiniert werden, indem auf der Keramik-Unterlage 7 eine metallisch reflektierende Schicht oder Platte angeordnet wird.

An die Aufheizung und die damit bewirkte Farbänderung des Bereichs 15 und die nachfolgende Abkühlung kann sich optional ein thermischer Nachbehandlungsschritt anschließen, um Zugspannungen abzubauen. Bereits eine thermische Nachbehandlung bei einer Temperatur von 800°C und einer Haltezeit von 5 Minuten bewirkt bei einer Glaskeramikplatte 1 ein deutliches Absinken von Zugspannungen. Die Aufheizung im thermischen Nachbehandlungsschritt auf eine Entspannungstemperatur kann mittels eines Lasers, einer anderen elektromagnetischen Strahlungsquelle oder auch in einem geeigneten Ofen erfolgen. Bei einer Aufheizung mit elektromagnetischer Strahlung kann auch eine Strahlungsquelle verwendet werden, deren Strahlung stärker absorbiert wird, als die elektromagnetische Strahlung zur Aufheizung im ersten, zur Farbveränderung verwendeten Schritt. Damit wird insbesondere die Oberfläche der Glaskeramik aufgeheizt. An der Oberfläche vorhandene Zugspannungen sind hinsichtlich der Festigkeit des Glaskeramikelements besonders relevant.

Bei dem in Fig. 1 gezeigten Beispiel ist ein Kühlfluid 18 vorgesehen, um eine zu starke Aufheizung der Oberfläche zu vermeiden. Eine andere Maßnahme, um einen Temperaturgradienten derart zu erzeugen, dass die Oberfläche während der Bestrahlung kühler bleibt als unter der Oberfläche liegende Bereiche der Glaskeramik, ist ein entsprechendes Temperatur-Startprofil des zu behandelnden Glaskeramikelements. So können Temperatur-Startprofile mit geeignetem Gradienten über die Dicke der Glaskeramik durch Tiefkühlen und/oder Vorheizen erzeugt werden. Bei einem geeigneten Startprofil kann vor der eigentlichen Einwirkung der elektromagnetischen Strahlung insbesondere das Volumen bereits heißer gemacht werden, als die Oberfläche. Als Beispiel sei ein Vorwärmen des Glaskeramikartikels mit Abschrecken der Oberflächen vor dem Einwirken der elektromagnetischen Strahlung genannt.

Gemäß noch einer Ausführungsform der Erfindung kann auch anders als in Fig. 1 gezeigt, der Laserstrahl 90 im Volumen der Glaskeramik fokussiert werden. Auf diese Weise können gegebenenfalls Druckspannungen an den Oberflächen des prozessierten Materials entstehen.

Generell kann das Glaskeramikmaterial vor oder nach erfolgter Farbänderung auch ertüchtigt werden. Dies kann durch thermisches oder chemisches Vorspannen zum gezielten Einbringen von oberflächennahen Druckspannungszonen erfolgen, so dass das Material eventuelle, durch den Prozess induzierte Zugspannungen erträgt bzw. kompensiert.

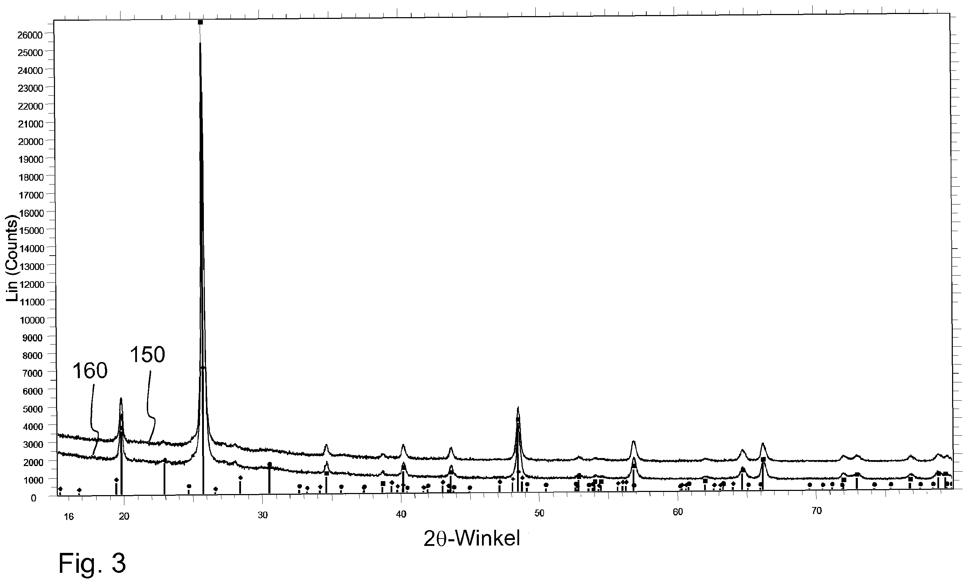

Fig. 3 zeigt Röntgenbeugungsspektren an einem monolithischen Glaskeramikelement, wie es mit dem anhand von Fig. 1 erläuterten Verfahren erhalten wird. Bei der untersuchten Glaskeramik handelt es sich um eine mit Vanadiumoxid volumengefärbte Lithium-Aluminosilikat-Glaskeramik, wie sie beispielsweise für Kochfelder eingesetzt wird. Mit der Röntgenbeugung wurden die Kristallphasen, der Kristallphasengehalt und die Kristallitgröße eines durch die Laserbestrahlung aufgehellten Bereichs 15 verglichen mit benachbarten, nicht aufgehellten Bereichen 16.

Zusätzlich mit einer Raute, einem Quadrat oder einem Kreis eingezeichnet sind die relativen Intensitäten verschiedener Kristallphasen. Mit den Quadraten sind dabei Röntgenbeugungs-Peaks von Hochquarz-Mischkristall (HQMK), mit Rauten die Röntgenbeugungs-Peaks von Lithium-Aluminosilikat, beziehungsweise Keatit-Mischkristall (KMK, LiAlSi₃O₈) und mit Kreisen die Röntgenbeugungs-Peaks des ebenfalls in der Glaskeramik nachgewiesenen Zirkontitanats (ZrTiO₄) gekennzeichnet. Die Kurve 150 ist dabei das Röntgenbeugungsspektrum am aufgehellten, also erfindungsgemäß behandelten Bereich 15 und die Kurve 160 das Röntgenbeugungsspektrum eines benachbarten, unveränderten Bereichs 16. Wie ersichtlich ist, sind die Kurven praktisch deckungsgleich, bis auf den aus Darstellungsgründen unterschiedlichen Offset. Bei genauerer Auswertung der Intensitäten der Röntgenbeugungspeaks ergibt sich als einziges ein sehr geringer Anstieg des Gehalts der Keatit-Mischkristallphase. Die Ergebnisse sind in der nachstehenden Tabelle nochmals zusammengefasst:

| Probe | Kristallitgröße [nm] [+/- 5%] | | HQMK-Phasen-gehalt [+/- 10%] | | KMK-Phasengehalt [+/- 10%] | |
|---|---|---|---|---|---|---|
| | HQMK | KMK | unkorrigiert | korrigiert | unkorrigiert | korrigiert |
| aufgehellter Bereich | 49 | Nicht bestimmbar | 54 | 66 | 3 | 3 |
| unveränderter Bereich | 48 | Nicht bestimmbar | 55 | 67 | 1 | 1 |

Für die Absorptionskorrekturen in den mit "korrigiert" bezeichneten Spalten wurde die chemische Zusammensetzung der Glaskeramik und eine angenommene Dichte von *ρ*=2.5g/cm³ verwendet.

Der Phasengehalt des Hochquarz-Mischkristalls ändert sich nach obiger Tabelle und Fig. 3 demnach nicht innerhalb des Messfehlers. Nur der Keatit-Mischkristall-Gehalt zeigt eine Änderung, die sich aufgrund des geringen Anteils dieser Kristallphase nicht nennenswert auf das Gefüge der Glaskeramik auswirkt. Auch wenn behandelte und nicht behandelte Bereiche eines Glaskeramikelements damit also keine wesentlichen strukturellen Unterschiede aufweisen, kann ein erfindungsgemäß behandelter Bereich einer Aluminosilikat-Glaskeramik, insbesondere einer Lithium-Aluminosilikat-Glaskeramik gemäß einer Weiterbildung an einem höheren Gehalt an Keatit-Mischkristall erkannt werden.

Änderungen der Kristallphasen und/oder deren Anteile können die Lichtstreuung beeinflussen. Verändert sich die Lichtstreuung im Material, führt dies auch zu einer veränderten Remission beim Beleuchten des behandelten Bereiches. Wie an dem obigen Beispiel demonstriert, sind behandelte und unbehandelte Bereiche in ihrer Morphologie, insbesondere in Bezug auf die vorhandenen Kristallphasen praktisch identisch. Daher ändert sich auch die Remission bei einem erfindungsgemäßen Erzeugnis zwischen einem behandelten und einem unbehandelten Bereich nicht oder allenfalls sehr geringfügig. In Weiterbildung der Erfindung ist daher ohne Beschränkung auf das vorstehend erläuterte Ausführungsbeispiel vorgesehen, dass sich die Remission des ersten Bereichs für sichtbares Licht von der Remission des zweiten Bereichs um höchstens absolut 20 %, vorzugsweise um höchstens absolut 10 %, besonders bevorzugt um höchstens absolut 5 %unterscheidet.

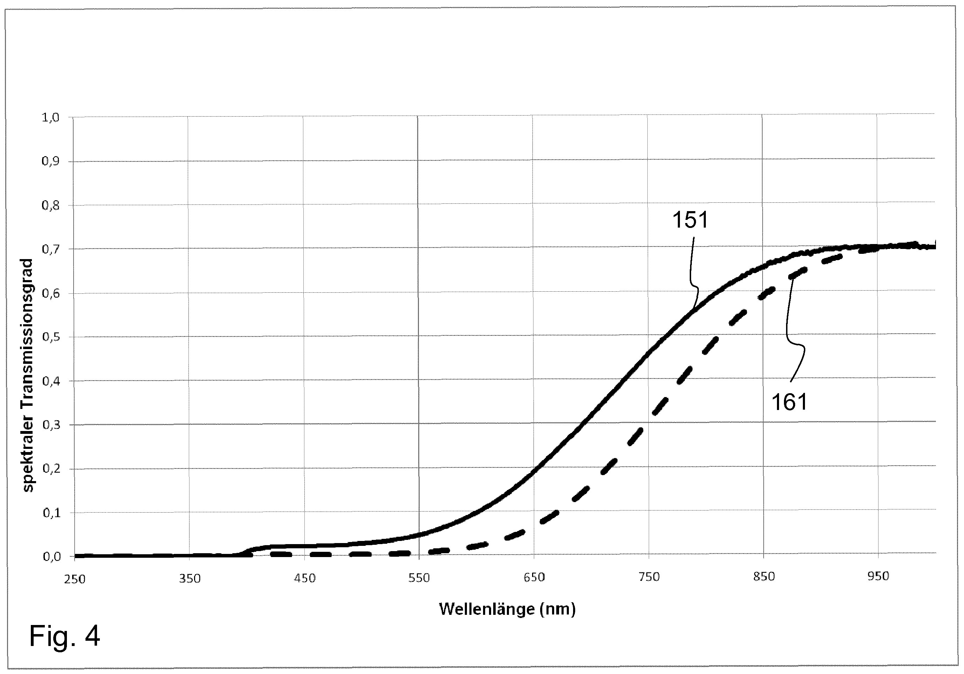

Fig. 4 zeigt die spektralen Transmissionsgrade einer erfindungsgemäß behandelten, mit Vanadiumoxid volumengefärbten Glaskeramik-Platte als Funktion der Wellenlänge. Die Kurve 151 in Fig. 4 bezeichnet dabei den spektralen Transmissionsgrad eines erfindungsgemäß behandelten Bereichs 15, Kurve 161 den spektralen Transmissionsgrad eines benachbarten, unbehandelten Bereichs 16. Anhand der beiden Kurven wird ersichtlich, dass die Transmission im gesamten Spektralbereich zwischen 420 Nanometern und 780 Nanometern im behandelten Bereich 15 deutlich erhöht ist. Dies ist von Vorteil, wenn weniger der Farbton beeinflusst, sondern die Durchsicht verbessert werden soll, um etwa gezielt Bereiche des Glaskeramikelement für leuchtende oder auch nicht leuchtende Anzeigeelemente durchsichtiger zu machen oder allgemein Sichtfenster einzufügen. Gemäß einer Weiterbildung der Erfindung und ohne Beschränkung auf das spezielle Ausführungsbeispiel ist im ersten Bereich daher die spektrale Transmission innerhalb des gesamten Spektralbereichs zwischen 420 Nanometern und 780 Nanometern höher als in einem benachbarten, zweiten Bereich.

Bemerkenswert am spektralen Transmissionsgrad gemäß Fig. 4 ist außerdem noch, dass die Transmission im blauen und grünen Spektralbereich relativ gesehen noch stärker ansteigt, als im roten Bereich. So steigt die Transmission bei 500 Nanometern von 0,0028 auf 0,027, also um einen Faktor von mehr als neun an. Bei 600 Nanometern ist der Faktor geringer und liegt hier bei 4,7. Gerade dies ist besonders günstig, um bei volumengefärbten, insbesondere mit Vanadiumoxid gefärbten Glaskeramiken die Anzeigefähigkeit für blaue und/oder grüne Anzeigeelemente oder für Farbdisplays zu verbessern. Gemäß noch einer Weiterbildung der Erfindung ist daher das Verhältnis der spektralen Transmissionsgrade von erstem zu zweiten Bereich bei einer Wellenlänge im Bereich von 400 bis 500 Nanometern größer als bei einer Wellenlänge im Bereich von 600 bis 800 Nanometern.

Nachfolgend sind die Farben, gemessen an den behandelten und unbehandelten Bereichen 15, 16 in Durchleuchtung der 4 mm dicken Glaskeramik-Platte für verschiedene Farbmodelle (xyY, Lab, Luv) und verschiedene Normlichtquellen aufgelistet:

**Normlichtart A**

| | Bereich 16 | Bereich 15 |
|---|---|---|
| x | 0,6307 | 0,5782 |
| y | 0,3480 | 0,3805 |
| Y | 1,7 | 7,6 |

**Normlichtart D65**

| | Bereich 16 | Bereich 15 |
|---|---|---|
| x | 0,5550 | 0,4773 |
| y | 0,3540 | 0,3752 |
| Y | 1,2 | 6,2 |
| Ra | -25,6 | 22,0 |

**Normlichtart C**

| | Bereich 16 | Bereich 15 |
|---|---|---|
| x | 0,5545 | 0,4763 |
| y | 0,3495 | 0,3685 |
| Y | 1,2 | 6,3 |
| Yellowness I. | | 174,0 120,8 |

**Normlichtart A**

| Bereich 16 | | Bereich 15 |
|---|---|---|
| L* | 13,6 | 33,2 |
| a* | 23,2 | 24,2 |
| b* | 19,1 | 27,7 |
| C* | 30,0 | 36,8 |

**Normlichtart D65**

| | Bereich 16 | Bereich 15 |
|---|---|---|
| L* | 10,6 | 30,0 |
| a* | 20,8 | 20,2 |
| b* | 13,8 | 22,9 |
| C* | 25,0 | 30,5 |

**Normlichtart C**

| | Bereich 16 | Bereich 15 |
|---|---|---|
| L* | 10,8 | 30,2 |
| a* | 20,1 | 19,2 |
| b* | 14,1 | 23,2 |
| C* | 24,5 | 30,1 |

**Normlichtart A**

| | Bereich 16 | Bereich 15 |
|---|---|---|
| L* | 13,6 | 33,2 |
| u* | 30,3 | 45,3 |
| v* | 0,9 | 4,3 |

**Normlichtart D65**

| | Bereich 16 | Bereich 15 |
|---|---|---|
| L* | 10,6 | 30,0 |
| u* | 22,6 | 36,6 |
| v* | 7,0 | 18,5 |

**Normlichtart C**

| | Bereich 16 | Bereich 15 |
|---|---|---|
| L* | 10,8 | 30,2 |
| u* | 22,9 | 36,7 |
| v* | 7,8 | 20,3 |

Bei den Farbmodellen Lab, xyY und Luv bezeichnen die Parameter L, beziehungsweise Y jeweils die Helligkeit. Der Parameter Y im xyY-Farbmodell korrespondiert dabei bei der Verwendung der Normlichtart C oder Normlichtart D65 zur Transmission τᵥᵢₛ im sichtbaren Spektralbereich und aus dem Vergleich der Y-Werte kann die Transmissionssteigerung ermittelt werden. Anhand der oben angegebenen Werte zeigt sich, dass die Transmission im sichtbaren Spektralbereich um mindestens einen Faktor 2,5 angehoben wird. Generell ist hierbei zu beachten, dass die Transmission auch vom Brechwert und der Dicke des durchleuchteten Glaskeramikelements abhängt. Generell kann aber gesagt werden, dass gemäß einer Weiterbildung der Erfindung die Transmission im sichtbaren Spektralbereich zwischen 380 und 780 Nanometern bezogen auf eine Dicke von 4 Millimetern um mindestens einen Faktor 2,5 angehoben wird.

Die Einfärbung durch Vanadiumoxid, V₂O₅, wie sie auch bei den vorstehend besprochenen Ausführungsbeispielen der Fig. 3 und 4 vorlag, ist auch aus der DE 10 2008 050 263 B4 bekannt. Demnach stellt sich der Färbemechanismus als ein komplexer Prozess dar. Für die Überführung des Vanadiumoxids in den färbenden Zustand ist nach dieser Druckschrift ein Redoxvorgang Voraussetzung. Im kristallisierbaren Ausgangsglas färbt das V₂O₅ noch relativ schwach und führt zu einem leicht grünlichen Farbton. Bei der Keramisierung findet der Redoxvorgang statt, das Vanadium wird reduziert und der Redoxpartner wird oxidiert.

Als primärer Redoxpartner fungiert das Läutermittel, was sich aus Mössbauer-Untersuchungen an Sb- und Sn-geläuterten Zusammensetzungen ergibt. Beim Keramisieren wird ein Teil des Sb³⁺ bzw. Sn²⁺ im Ausgangsglas in die höhere Oxidationsstufe Sb⁵⁺ bzw. Sn⁴⁺ überführt. Es wurde angenommen, dass das Vanadium in reduzierter Oxidationsstufe als V⁴⁺ oder V³⁺ in den Keimkristall eingebaut wird und dort durch Elektronen-Charge-Transfer-Reaktionen intensiv färbt. Als weiterer Redoxpartner kann auch TiO₂ die Einfärbung durch Vanadiumoxid verstärken. Neben der Art und Menge der Redoxpartner im Ausgangsglas hat nach der DE 10 2008 050 263 B4 auch der Redoxzustand, welcher im Glas bei der Schmelze eingestellt wird einen Einfluss. Ein niedriger Sauerstoff-Partialdruck, also eine reduzierend eingestellte Schmelze, z. B. durch hohe Schmelztemperaturen, verstärkt die Farbwirkung des Vanadiumoxids.

Es ist aber auch möglich, dass das reduzierte V⁴⁺ oder V³⁺ nicht oder nicht ausschließlich in die Keimkristalle, sondern möglicherweise auch in eine andere struktuerelle Umgebung, etwa in den Hochquarz-Mischkristall oder in Cluster eingebaut wird.

Mit der Erfindung wird nun diese Einfärbung lokal durch die Einstrahlung hochenergetischer Strahlung und Erwärmung der Glaskeramik verändert.

Dies kann mit der Beeinflussung des farbgebenden Charge-Transfer-Prozesses in Verbindung gebracht werden. Da der hypothetische Elektronentransfer zwischen Donator- und Akzeptorzentren beim Charge Transfer für die Absorption maßgeblich ist, ist anzunehmen dass durch die einwirkende hochenergetische Strahlung und Aufheizung hier eine strukturelle Änderung an den Zentren erfolgt. Diese strukturelle Änderung vermindert die Häufigkeit/Wahrscheinlichkeit der Elektronentransfer-Übergänge und damit die Absorption.

Wegen der Sensibilität, mit der die Vanadin-Einfärbung auf Sauerstoff-Partialdruck und Redoxprozesse bei der Keramisierung reagiert, können hierfür konkurrierende Wertigkeitswechsel in Frage kommen. Das heißt, die Strahlung in Verbindung mit der Erwärmung kann Elektronen von den Donator- oder Akzeptorzentren möglicherweise entfernen und diese damit für den Charge Transfer Prozess passivieren.

Die Beobachtung dass sich die verminderte Einfärbung durch thermische Behandlung wieder rückgängig machen lässt unterstützt die Hypothese. Die thermodynamisch stabilere strukturelle Situation der Zentren lässt sich wiederherstellen. Damit wird die Häufigkeit der farbgebenden Charge-Transfer-Übergänge wieder erhöht.

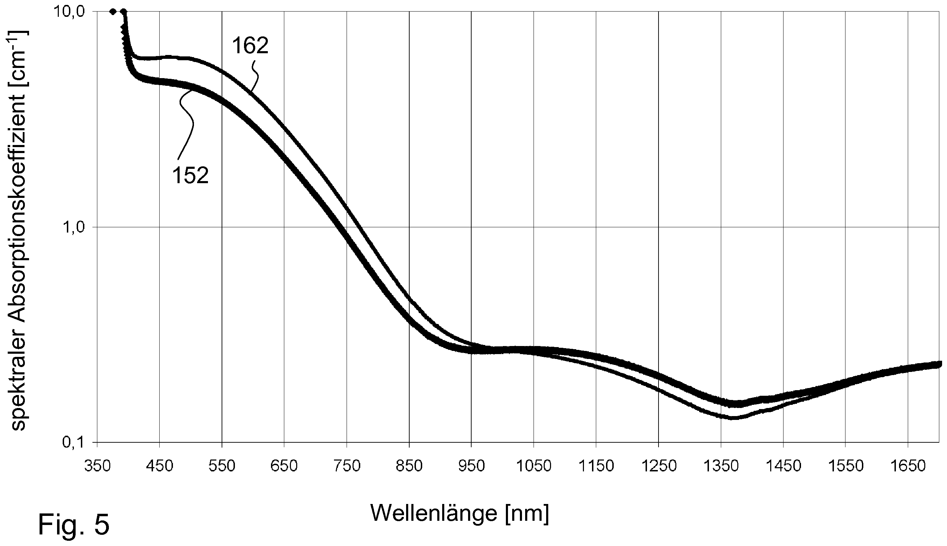

In Fig. 5 ist ein Diagramm mit dem Verlauf der gemessenen Absorptionskoeffizienten eines erfindungsgemäß aufgehellten und eines unbehandelten Bereichs als Funktion der Wellenlänge gezeigt. Wie auch bei dem in Fig. 4 gezeigten Verlauf der Lichttransmission ist die Glaskeramik, an welcher der Verlauf gemessen wurde, mit Vanadiumoxid gefärbt. Die höhere Lichttransmission eines aufgehellten Bereichs 15 zeigt sich hier nun daran, dass der spektrale Absorptionskoeffizient 152 eines aufgehellten Bereichs im sichtbaren Spektralbereich kleiner ist, als der Absorptionskoeffizient 162 eines benachbarten, nicht aufgehellten Bereichs 16. Insbesondere kann der Absorptionskoeffizient der Glaskeramik eines aufgehellten Bereichs 15, wie auch bei dem in Fig. 4 gezeigten Beispiel, im gesamten sichtbaren Spektralbereich kleiner sein, als der Absorptionskoeffizient des Materials eines benachbarten, nicht aufgehellten Bereichs 16. Der Absorptionskoeffizient sinkt im sichtbaren Spektralbereich mit steigender Wellenlänge. Entsprechend steigt die spektrale Lichttransmission ähnlich zu dem in Fig. 3 gezeigten Beispiel an.

Weiterhin fällt auf, dass sich die Verläufe der spektralen Absorptionskoeffizienten 152, 162 im Infrarot-Spektralbereich bei etwa 1000 Nanometern Wellenlänge überkreuzen. Ab dieser Wellenlänge ist nun der Absorptionskoeffizient des ersten Bereiches 15 größer als der Absorptionskoeffizient eines benachbarten zweiten Bereichs 16.

Bei dem gezeigten Beispiel ist dabei der Absorptionskoeffizient des ersten Bereichs 15 im Infraroten bis zu einer Wellenlänge von 1650 Nanometern größer, als im zweiten Bereich 16.

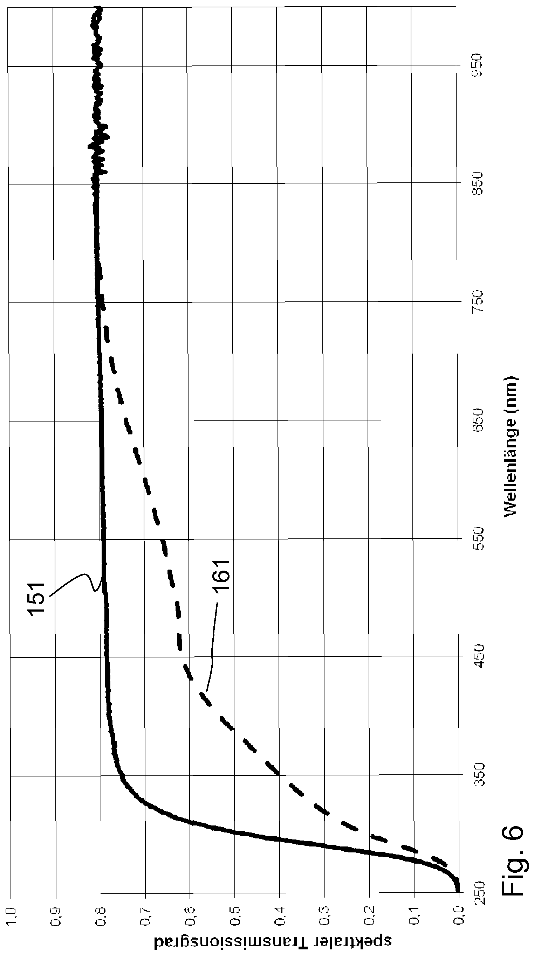

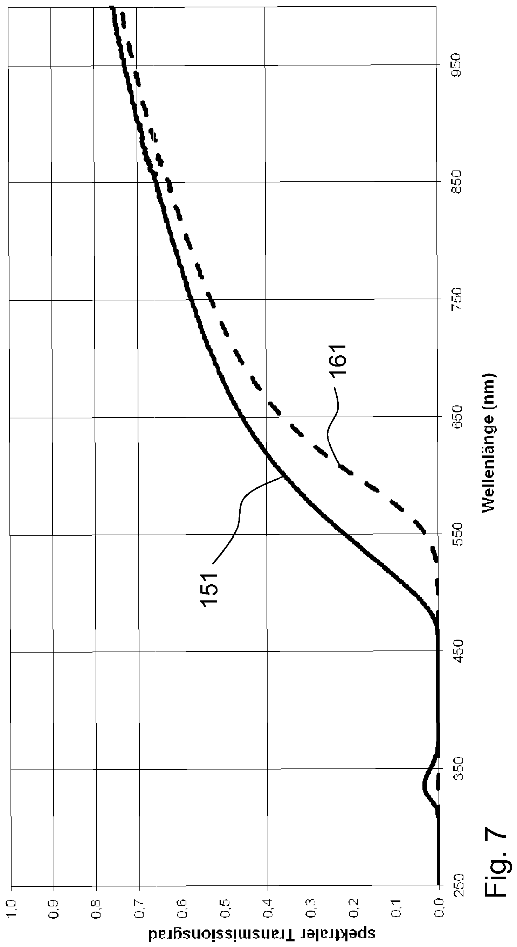

Allgemein, ohne Beschränkung auf das Ausführungsbeispiel ist also gemäß einer Ausführungsform der Erfindung vorgesehen, dass der Absorptionskoeffizient des ersten Bereichs 15 in zumindest einem Spektralbereich mit einer Wellenlänge größer als 900 Nanometer größer als der Absorptionskoeffizient eines zweiten, benachbarten Bereichs 16 und damit die integrale Lichttransmission des ersten Bereichs 15 in dem Spektralbereich mit einer Wellenlänge größer als 900 Nanometer kleiner ist, als die integrale Lichttransmission des zweiten, benachbarten Bereichs 16 in diesem Spektralbereich. Vorzugsweise liegt der genannte Spektralbereich mindestens zwischen 1100 Nanometern und 1400 Nanometern, was auch für das dargestellte Ausführungsbeispiel der Fig. 6 gilt.

Der genannte Spektralbereich gilt insbesondere für mit Vanadiumoxid-gefärbte Glaskeramiken. Auch bei Färbung mit Seltene Erden, insbesondere Cer, vorzugsweise zusammen mit Chrom und/oder, Nickel und/oder Kobalt, mit Mangan, vorzugsweise zusammen mit Zinn und/oder Titan, oder mit Eisen, vorzugsweise zusammen mit Zinn und/oder Titan kann dieser Effekt eines im ersten Bereich 15 höheren Absorptionskoeffizienten im Infrarot-Spektralbereich auftreten. Gegebenenfalls unterscheidet sich aber der Wellenlängenbereich von dem in Fig. 6 gezeigten Beispiel.

Der im infraroten Spektralbereich höhere Absorptionskoeffizient des ersten Bereichs 15 kann beispielsweise vorteilhaft für eine unter dem Bereich 15 einer Glaskeramikplatte angeordnete Anzeigeeinrichtung 23 sein. Damit wird die Gefahr verringert, dass durch Hitzequellen auf dem Kochfeld die Anzeigeeinrichtung durch die Glaskeramik hindurch zu sehr aufgeheizt und beschädigt wird.

Gemäß noch einer Ausführungsform der Erfindung wird ein diffusionsgefärbtes Glaskeramik-Element erfindungsgemäß behandelt und auf diese Weise die Färbung durch die Diffusionsfarbe lokal verändert. Diffusionsfarben diffundieren in das Glas oder die Glaskeramik hinein und verursachen dabei ebenfalls eine Volumenfärbung. Dabei wird im Allgemeinen das Material aber nicht durchgefärbt, sondern es ergibt sich eine volumengefärbte, von der Oberfläche bis in eine gewisse Tiefe in das Material hinein erstreckende volumengefärbte Schicht.

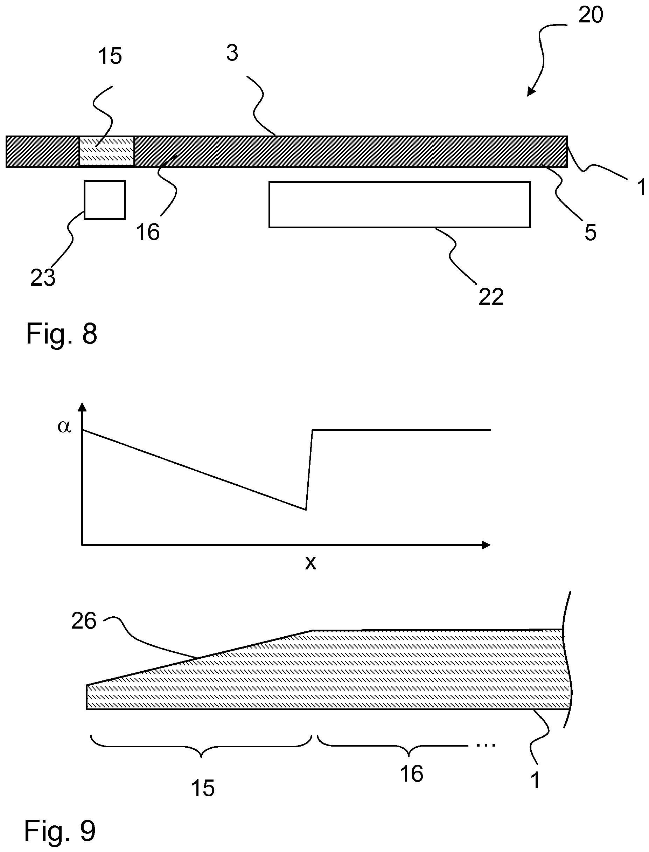

Fig. 8 zeigt ein Glaskeramik-Kochfeld 20 als eine der bevorzugten Anwendungen der Erfindung. Das Glaskeramik-Kochfeld 20 umfasst eine Glaskeramikplatte 1 mit einer ersten Seite 3, welche hier die Oberseite bildet, sowie einer gegenüberliegenden zweiten Seite, welche die Unterseite bildet. Unter der Unterseite, beziehungsweise der zweiten Seite 5 ist ein Heizelement 22 angeordnet, um ein auf die erste Seite 3 über das Heizelement 22 gestelltes Gargefäß zu erhitzen. Die Glaskeramikplatte 1 weist einen ersten Bereich 15 auf, welcher sich durch die Glaskeramikplatte 1 von einer zur gegenüberliegenden Oberfläche der beiden Seiten 3, 5 erstreckt und in welchem die Lichttransmission gegenüber benachbarten Bereichen 16 erhöht ist. Unter dem ersten Bereich 15 ist eine vorzugsweise selbstleuchtende Anzeigeeinrichtung 23 angeordnet, deren Licht durch den ersten Bereich 15 hindurch sichtbar ist. Der erste Bereich 15 wird dabei durch die erfindungsgemäße Behandlung mit einem Laser oder einer anderen lokal einwirkenden elektromagnetischen Strahlungsquelle, Aufheizung und anschließendes Abkühlen erzeugt. Um zu vermeiden, dass die unter der Glaskeramikplatte 1 angeordneten Teile, wie etwa das Heizelement 22 bei Betrachtung der Oberseite 3 sichtbar sind, kann eine volumengefärbte Glaskeramik, etwa mit einem Vanadiumoxid-Gehalt von mehr als 0,02 Gewichtsprozent verwendet werden. Durch die lokale Abschwächung der Absorption, beziehungsweise lokale Aufhellung der Glaskeramik im Bereich 15 kann dennoch das Licht der Anzeigeeinrichtung 23 durch die Glaskeramikplatte 1 transmittiert werden und ist für die Bedienperson gut sichtbar.

Da mit der Erfindung sehr deutliche Aufhellungen erzielt werden können, eignet sich das Verfahren besonders auch für dunkle Glaskeramik-Platten, um diese für Anzeigen lichtdurchlässig zu machen. Ohne Beschränkung auf das Ausführungsbeispiel ist daher gemäß einer Ausführungsform der Erfindung vorgesehen, dass eine Glaskeramik-Platte verwendet wird, bei welcher die integrale Lichttransmission im sichtbaren Spektralbereich des zweiten, zum ersten Bereich 15 benachbarten Bereichs 16 höchstens 5%, bevorzugt höchstens 2,5% beträgt. Mit anderen Worten weist die Glaskeramikplatte, welche das Ausgangsmaterial für die Kochfläche bildet, eine entsprechend niedrige Transmission von höchstens 5%, bevorzugt höchstens 2,5% auf.

Anzeigeeinrichtungen können auch unter einer Flachfacette angeordnet sein. Ein Beispiel einer Glaskeramikplatte 1 mit einer solchen Flachfacette 26 zeigt Fig. 9. Wenn nun etwa wie bei dem in Fig. 8 gezeigten Beispiel eine Anzeigeeinrichtung unter der Flachfacette 26 angeordnet werden soll, ergibt sich bei volumengefärbten Gläsern und Glaskeramiken das Problem, dass aufgrund der variierenden Dicke des Materials im Bereich der Flachfacette 26 die Lichttransmission ebenfalls entlang der Oberfläche variiert. Die Erfindung bietet hier nun generell die Möglichkeit, Transmissionsänderungen bei variierenden Dicken des Glaskeramikmaterials auszugleichen. Dazu kann dickenabhängig die Behandlungsdauer und/oder die Leistung der eingestrahlten elektromagnetischen Strahlung entsprechend variiert werden. Oberhalb der Glaskeramikplatte 1 ist dazu in Fig. 9 schematisch ein Verlauf des Absorptionskoeffizienten a als Funktion der Ortskoordinate x entlang der Oberfläche der Glaskeramikplatte 1 aufgetragen. Die Flachfacette 26 geht hier vom Rand der Glaskeramikplatte aus, wo die Glaskeramikplatte dementsprechend die niedrigste Dicke und damit ohne erfindungsgemäße Behandlung die höchste Transmission aufweist. Um nun die Transmission entlang der Flachfacette 26 konstant zu halten, wird der Absorptionskoeffizient α vom Rand ausgehend bis zur innenseitigen Kante der Flachfacette 26 graduell abgesenkt. Der mit der Flachfacette 26 versehene Bereich bildet damit auch den ersten Bereich 15, in welchem die Färbung sich von einem zweiten, benachbarten Bereich 16 neben der Flachfacette 26 (also der Bereich mit planparallelen Seitenflächen) unterscheidet.

Die Lichttransmission bleibt damit entlang der Flachfacette 26 konstant auf dem Wert am Rand der Platte. Der Absorptionskoeffizient kann dann an der innenseitigen Kante der Flachfacette 26 schnell wieder auf den Wert der unbehandelten Glaskeramik angehoben werden. Der Verlauf des Absorptionskoeffizienten zeigt daher hier eine Stufe. Die Flachfacette 26 erscheint damit als gleichmäßig aufgehellter Bereich. Ohne Beschränkung auf den speziellen, in Fig. 9 gezeigten Anwendungsfall kann daher ein Glaskeramikelement mit entlang zumindest eines Bereichs der Oberfläche variierender Dicke vorgesehen werden, bei welchem der Absorptionskoeffizient durch die erfindungsgemäße Behandlung, also im ersten Bereich 15 abhängig von der Dicke lokal variiert wird, insbesondere, so dass eine durch die variierende Dicke sich lokal ändernde Lichttransmission zumindest teilweise ausgeglichen wird. Dazu wird mit steigender Dicke insbesondere ein kleinerer Absorptionskoeffizient eingestellt.

Bei dem Ausführungsbeispiel der Fig. 8 stellt der aufgehellte erste Bereich 15 ein lokal begrenztes Fenster dar, welches sich typischerweise nur über einen kleinen Teil der Fläche der Seite 3 erstreckt. Auch eine Flachfacette 26, wie sie das Beispiel der Fig. 9 zeigt, erstreckt sich typischerweise nicht über einen großen Teil der Seite 3. Gemäß einer Ausführungsform der Erfindung nimmt daher der Flächenanteil des oder der ersten Bereiche 15 an einer Seite des Glaskeramikelements zusammengenommen höchstens ein Drittel der Fläche dieser Seite 3 ein.

Es ist dem Fachmann ersichtlich, dass die Erfindung nicht auf die beschriebenen Ausführungsbeispiele beschränkt ist, sondern im Rahmen des Gegenstands der Patentansprüche vielfältig variiert werden kann. So kommen neben einem Laser auch andere Strahlungsquellen in Betracht. Beispielsweise kann eine Hochleistungs-Kurzbogenlampe verwendet werden. Um eine lokal begrenzte Einwirkung des Lichts zu erzielen kann dazu das Glaskeramikelement geeignet maskiert werden. Ebenfalls möglich ist die Verwendung einer Mikrowellen-Quelle mit geeigneter Maskierung.

### Bezugszeichenliste

- 1: Glaskeramikplatte
- 3: erste Seite von 1
- 5: zweite Seite von 1
- 7: Siliziumoxid-Keramikunterlage
- 9: Laser
- 11: Übertragungsfaser
- 13: Laserscanner
- 14: Linienoptik
- 15: lokaler Bereich mit veränderter Transmission
- 16: Bereich mit unveränderter Transmission
- 18: Kühlfluid
- 20: Glaskeramik-Kochfeld
- 22: Heizelement
- 24: Anzeigeeinrichtung
- 26: Flachfacette
- 70: Metallplatte
- 90: Laserstrahl
- 100: Mantelfläche von 10
- 101: Innenfläche von 10
- 150: Röntgenbeugungsspektrum von 15
- 160: Röntgenbeugungsspektrum von 16
- 151: spektraler Transmissionsgrad von 15
- 161: spektraler Transmissionsgrad von 16
- 152: spektraler Absorptionskoeffizient von 15
- 162: spektraler Absorptionskoeffizient von 16

## Patentansprüche

1. Verfahren zur Herstellung eines Glaskeramikartikels mit lokal veränderter Transmission, wobei die Lichtstreuung in der Glaskeramik des ersten Bereichs (15) höchstens um absolut 20 %, vorzugsweise höchstens um absolut 10 % gegenüber der Lichtstreuung in der Glaskeramik des zweiten Bereichs (16) höher ist, bei welchem
- ein mit Farbzentren oder färbenden Ionen volumengefärbter Glaskeramikartikel bereitgestellt und
- lokal begrenzt auf einen Bereich der Oberfläche des Glaskeramikartikels elektromagnetische Strahlung gerichtet wird, welche im Volumen des Glaskeramikmaterials absorbiert wird, und
- wobei die Leistungsdichte der elektromagnetischen Strahlung so gewählt wird, dass sich der bestrahlte Bereich des Glaskeramikartikels aufheizt, wobei mindestens so lange aufgeheizt wird, bis im Volumen des erhitzten Bereichs der Absorptionskoeffizient und damit die Lichttransmission des Glaskeramikmaterials in zumindest einem spektralen Bereich geändert wird, und wobei
- die Einstrahlung der elektromagnetischen Strahlung nach der Aufheizung beendet wird und der bestrahlte Bereich abkühlt, wobei
- die Glaskeramik nach der Erwärmung mit einer Abkühlrate von mindestens 1 K pro Sekunde, vorzugsweise zumindest 5 K pro Sekunde, besonders bevorzugt zumindest 10 K pro Sekunde zumindest innerhalb eines Temperaturbereichs von der Maximaltemperatur bis 100 K unterhalb der Maximaltemperatur abgekühlt wird, und wobei zur Erzeugung dieser Abkühlrate die Oberfläche des Glaskeramikartikels während der Einwirkung der elektromagnetischen Strahlung mit einem Kühlfluid (18) gekühlt wird.

2. Verfahren gemäß Anspruch 1, **dadurch gekennzeichnet dass** die Aufheizung mit einem Laser (9) erfolgt.

3. Verfahren gemäß dem Anspruch 2, **dadurch gekennzeichnet, dass** mittels eines Laserscanners der Laserstrahl über die Oberfläche des Glaskeramikartikels gerastert wird, so dass ein Bereich aufgeheizt wird, dessen Oberfläche größer ist als der Lichtfleck des Laserstrahls auf der Oberfläche des Glaskeramikartikels.

4. Verfahren gemäß einem der Ansprüche 1 bis 3, wobei ein mit Vanadiumoxid volumengefärbter GlaskeramikArtikel bereitgestellt und wobei in dem lokalen Bereich die Transmission im sichtbaren Spektralbereich zwischen 380 Nanometern und 780 Nanometern durch die Erhitzung angehoben wird.

5. Verfahren gemäß einem der Ansprüche 1 bis 4, **dadurch gekennzeichnet, dass** die Glaskeramik mit einer Temperaturänderungsrate von mindestens 250 K pro Minute aufgeheizt wird.

6. Verfahren gemäß einem der Ansprüche 1 bis 5, **dadurch gekennzeichnet, dass** mittels einer Einrichtung, vorzugsweise einer Unterlage, auf welcher der Glaskeramikartikel gelagert wird, die elektromagnetische Strahlung, die durch den Glaskeramikartikel transmittiert ist, in den Glaskeramikartikel zurückreflektiert wird.

7. Verfahren gemäß einem der Ansprüche 1 bis 6, **dadurch gekennzeichnet, dass** ein thermischer Nachbehandlungsschritt nach der Abkühlung durchgeführt wird, insbesondere, um Zugspannungen abzubauen, wobei der thermische Nachbehandlungsschritt vorzugsweise zumindest eine der Schritte umfasst:
- einen zweiten Aufheizschritt mittels elektromagnetischer Strahlung
- ein thermisches Nachwärmen und Entspannen in einem Ofen.

8. Erzeugnis mit einem volumengefärbten, monolithischen Glaskeramikelement, welches einen ersten (15) Bereich aufweist, in welchem die Färbung sich von einem zweiten, benachbarten Bereich (16) unterscheidet, so dass der Absorptionskoeffizient des ersten Bereichs (15) und damit die Lichttransmission durch den ersten Bereich (15) verschieden ist vom Absorptionskoeffizienten und damit der Lichttransmission eines zweiten, benachbarten Bereichs (16), wobei im ersten Bereich (15) die spektrale Transmission innerhalb des gesamten Spektralbereichs zwischen 420 Nanometern und 780 Nanometern höher als in einem benachbarten, zweiten Bereich (16) ist und wobei die Lichtstreuung in der Glaskeramik des ersten Bereichs (15) höchstens um absolut 20 %, vorzugsweise höchstens um absolut 10 % gegenüber der Lichtstreuung in der Glaskeramik des zweiten Bereichs (16) höher ist, **dadurch gekennzeichnet, dass**
- der erste Bereich (15) ein Fenster ist, welches von mindestens drei Seiten oder zu mindestens 50% seines Umfangs von benachbarten, nicht aufgehellten zweiten Bereichen umgeben ist.

9. Erzeugnis gemäß Anspruch 8, wobei die Glaskeramik des Glaskeramikelements Ionen zumindest eine der folgenden Metalle oder Kombinationen von Ionen der folgenden Metalle enthält:
- Vanadium, insbesondere zusammen mit Zinn und/oder Titan
- Seltene Erden, insbesondere Cer, vorzugsweise zusammen mit Chrom und/oder Nickel und/oder Kobalt,
- Mangan, vorzugsweise zusammen mit Zinn und/oder Titan,
- Eisen, vorzugsweise zusammen mit Zinn und/oder Titan.

10. Erzeugnis gemäß Anspruch 9, **gekennzeichnet durch** ein mit Vanadiumoxid volumengefärbtes Glaskeramikelement, bei welchem im ersten Bereich (15) die integrale Lichttransmission im sichtbaren Spektralbereich gegenüber einem benachbarten zweiten Bereich (16) angehoben ist, und wobei weiterhin die Glaskeramik zumindest 0,005 Gewichtsprozent Vanadiumoxid enthält.

11. Erzeugnis gemäß einem der Ansprüche 8 bis 10, **gekennzeichnet**
- **durch** ein diffusionsgefärbtes Glaskeramikelement, wobei der erste Bereich (15) eine höhere Lichttransmission im sichtbaren Spektralbereich aufweist, als ein benachbarter Bereich (16) oder
- **dadurch** dass der Absorptionskoeffizient des ersten Bereichs (15) in zumindest einem Spektralbereich mit einer Wellenlänge größer als 900 Nanometer, vorzugsweise im Bereich von 1100 Nanometern bis 1400 Nanometern, größer als der Absorptionskoeffizient eines zweiten, benachbarten Bereichs (16) und damit die integrale Lichttransmission des ersten Bereichs (15) in dem Spektralbereich mit einer Wellenlänge größer als 900 Nanometer kleiner ist, als die integrale Lichttransmission des zweiten, benachbarten Bereichs (16) in diesem Spektralbereich.

12. Erzeugnis gemäß einem der Ansprüche 8 bis 11, **dadurch gekennzeichnet, dass** sich der erste Bereich (15) von einer ersten bis zu einer zweiten, gegenüberliegenden Oberfläche des Glaskeramikelements erstreckt.

13. Erzeugnis gemäß einem der Ansprüche 8 bis 12, **dadurch gekennzeichnet, dass**
- der Flächenanteil des oder der ersten Bereiche (15) an einer Seite (3) der Glaskeramik-Kochfläche zusammengenommen höchstens ein Drittel der Fläche dieser Seite einnimmt.

14. Erzeugnis gemäß einem der Ansprüche 8 bis 13, mit einem Aluminosilikat-Glaskeramikelement, **dadurch gekennzeichnet, dass** der erste Bereich (15) einen höheren Gehalt an Keatit-Mischkristall aufweist.

15. Erzeugnis gemäß einem der Ansprüche 8 bis 14, **dadurch gekennzeichnet, dass** sich die Remission des ersten Bereichs für sichtbares Licht von der Remission des zweiten Bereichs um höchstens absolut 20 %, vorzugsweise um höchstens absolut 10 %, besonders bevorzugt um höchstens absolut 5 % unterscheidet, und wobei optional die Transmission im sichtbaren Spektralbereich im ersten Bereich gegenüber dem zweiten, benachbarten Bereich um mindestens einen Faktor 2 erhöht ist.

16. Erzeugnis gemäß einem der Ansprüche 8 bis 15, **dadurch gekennzeichnet, dass** im ersten Bereich (15) die Spannung an der Oberfläche höher ist, als in der Mitte des Volumens des ersten Bereichs (15).

17. Erzeugnis gemäß einem der vorstehenden Ansprüche, mit einem Glaskeramikelement mit entlang zumindest eines Bereichs der Oberfläche variierender Dicke, bei welchem der Absorptionskoeffizient abhängig von der Dicke lokal variiert.

18. Glaskeramik-Kochfeld (20) mit einem Erzeugnis gemäß einem der vorstehenden Ansprüche in Form einer Glaskeramikplatte (1), wobei die Glaskeramikplatte (1) einen ersten Bereich (15) aufweist, welcher sich durch die Glaskeramikplatte von einer zur gegenüberliegenden Oberfläche der beiden Seiten (3,5) erstreckt und in welchem die Lichttransmission gegenüber benachbarten Bereichen (16) erhöht ist, und wobei unter dem ersten Bereich eine vorzugsweise selbstleuchtende Anzeigeeinrichtung angeordnet ist, deren Licht durch den ersten Bereich (15) hindurch sichtbar ist.

## Claims

1. A method for producing a glass ceramic article with locally modified transmittance, wherein light scattering in a first zone (15) of the glass ceramic is higher by not more than 20 percentage points, preferably by not more than 10 percentage points than light scattering in a second zone (16) of the glass ceramic, the method comprising:
- providing a glass ceramic article which is volume-coloured by colour centres or colour-imparting ions; and
- directing electromagnetic radiation onto a localized surface area of the glass ceramic article, which radiation is absorbed in the volume of the glass ceramic material; and
- wherein the power density of the electromagnetic radiation is chosen such that the irradiated region of the glass ceramic article is heated, wherein heating of the irradiated region is performed at least until the absorption coefficient and thus the light transmittance of the glass ceramic material is altered in the volume of the heated region, at least in a spectral range; and wherein
- the irradiation of the electromagnetic radiation is terminated after the heating, and the irradiated region is allowed to cool; wherein
- the glass ceramic is cooled after the heating at a cooling rate of at least 1 K per second, preferably at least 5 K per second, most preferably at least 10 K per second, at least within a temperature range between the maximum temperature and 100 K below the maximum temperature; and wherein, for producing said cooling rate, the surface of the glass ceramic article is cooled with a cooling fluid (18) during exposure to the electromagnetic radiation.

2. The method according to claim 1, **characterised in that** the heating is performed using a laser (9).

3. The method according to claim 2, **characterised in that** the laser beam is scanned over the surface of the glass ceramic article by a laser scanner, so that a region is heated which has a surface area that is larger than the light spot of the laser beam on the surface of the glass ceramic article.

4. The method according to any one of claims 1 to 3, wherein a glass ceramic article is provided which is volume-coloured by vanadium oxide, and wherein the transmittance in the visible spectral range between 380 nanometres and 780 nanometres is increased in said localized area by the heating.

5. The method according to any one of claims 1 to 4, **characterised in that** the glass ceramic is heated with a temperature change rate of at least 250 K per minute.

6. The method according to any one of claims 1 to 5, **characterised in that** the electromagnetic radiation transmitted through the glass ceramic article is reflected back into the glass ceramic article by a means, preferably a support on which the glass ceramic article is supported.

7. The method according to any one of claims 1 to 6, **characterised in that** after the cooling, a step of thermal post-treatment is performed, in particular to relieve tensile stresses, wherein the thermal post-treatment step preferably comprises at least one of the following steps:
- a second heating step using electromagnetic radiation;
- thermal reheating and stress relieve in a furnace.

8. A product comprising a volume-coloured monolithic glass ceramic element having a first zone (15) with a coloration that is different from that of a second, adjoining zone (16), such that the absorption coefficient of the first zone (15) and thus the light transmittance through the first zone (15) is different from the absorption coefficient and thus the light transmittance of a second, adjoining zone (16), wherein in the first zone (15) spectral transmittance is greater than in an adjoining, second zone (16) within the entire spectral range between 420 nanometres and 780 nanometres, and wherein light scattering in the first zone (15) of the glass ceramic is higher than light scattering in the second zone (16) of the glass ceramic by not more than 20 percentage points, preferably by not more than 10 percentage points; **characterised in that**
- the first zone (15) is a window which is surrounded along at least three edges thereof or along at least 50 % of its contour by adjoining non-brightened second zones.

9. The product according to claim 8, wherein the glass ceramic of the glass ceramic element includes ions of at least one of the following metals or combinations of ions of the following metals:
- vanadium, in particular in combination with tin and/or titanium;
- rare earth elements, in particular cerium, preferably in combination with chromium and/or nickel and/or cobalt;
- manganese, preferably in combination with tin and/or titanium;
- iron, preferably in combination with tin and/or titanium.

10. The product according to claim 9, **characterised by** a glass ceramic element volume-coloured by vanadium oxide, wherein in the first zone (15) integral light transmittance in the visible spectral range is increased relative to a second, adjoining zone (16), and wherein furthermore the glass ceramic element includes at least 0.005 percent by weight of vanadium oxide.

11. The product according to any one of claims 8 to 10, **characterised**
- **by** a diffusion-coloured glass ceramic element in which the first zone (15) exhibits increased light transmittance in the visible spectral range compared to an adjoining zone (16); or
- in that at least in a spectral range having a wavelength of greater than 900 nanometres, preferably in a range from 1100 nanometres to 1400 nanometres, the absorption coefficient of the first zone (15) is greater than the absorption coefficient of a second, adjoining zone (16), so that in the spectral range with a wavelength of greater than 900 nanometres integral light transmittance of the first zone (15) is smaller than integral light transmittance of the second, adjoining zone (16) in this spectral range.

12. The product according to any one of claims 8 to 11, **characterised in that** the first zone (15) extends from a first surface to a second, opposite surface of the glass ceramic element.

13. The product according to any one of claims 8 to 12, **characterised in that**
- on a face (3) of the glass ceramic cooking surface, the total surface area of the one or more first zones (15) occupies not more than one third of the surface area of this face.

14. The product according to any one of claims 8 to 13 comprising an aluminosilicate glass ceramic element, **characterised in that** the first zone (15) has a greater content of keatite solid solution,

15. The product according to any one of claims 8 to 14, **characterised in that** remission for visible light in the first zone differs from remission of the second zone by not more than 20 percentage points, preferably by not more than 10 percentage points, most preferably by not more than 5 percentage points, and wherein, optionally, the transmittance in the visible spectral range of the first zone is greater by at least a factor of 2 compared to the second, adjoining zone.

16. The product according to anyone of claims 8 to 15, **characterised in that**, in the first zone (15), stress at the surface is higher than in the centre of the volume of the first zone (15).

17. The product according to any one of the preceding claims, comprising a glass ceramic element which has a thickness that varies along at least a portion of the surface, wherein the absorption coefficient locally varies as a function of the thickness,

18. A glass ceramic cooktop (20) comprising a product according to any one of the preceding claims in the form of a glass ceramic panel (1), wherein said glass ceramic panel (1) has a first zone (15) extending across the glass ceramic panel from one surface to the opposite surface of the two faces (3, 5) thereof, and in which light transmittance is increased relative to adjoining zones (16), and wherein a preferably self-luminous display device is disposed below said first zone, the light thereof being visible through the first zone (15).

## Revendications

1. Procédé de fabrication d'un article en vitrocéramique à transmission localement modifiée, où la diffusion de la lumière dans la vitrocéramique de la première zone (15) est supérieure au maximum de 20 % absolus, de préférence au maximum de 10 % absolus, à la diffusion de lumière dans la vitrocéramique de la deuxième zone (16), procédé selon lequel
- un article en vitrocéramique, teinté dans la masse, avec des centres de couleur ou des ions colorants, est mis à disposition, et
- un rayonnement électromagnétique est dirigé de façon localement limitée sur une zone de la surface de l'article en vitrocéramique et est absorbé dans le volume du matériau vitrocéramique, et
- sachant que la densité de puissance du rayonnement électromagnétique est choisie telle que la zone irradiée de l'article en vitrocéramique s'échauffe, réchauffement se poursuivant au moins jusqu'à ce que le coefficient d'absorption, et donc la transmission de lumière, du matériau vitrocéramique soit modifié dans le volume de la zone chauffée, dans au moins un domaine spectral, et sachant que
- l'application du rayonnement électromagnétique est arrêtée après réchauffement, et la zone irradiée refroidit, sachant que
- après réchauffement, la vitrocéramique est refroidie à une vitesse de refroidissement d'au moins 1 K par seconde, de préférence d'au moins 5 K par seconde, et de façon particulièrement avantageuse d'au moins 10 K par seconde, au moins dans une plage de températures allant de la température maximale à jusqu'à 100 K en dessous de la température maximale, et sachant que pour obtenir cette vitesse de refroidissement, la surface de l'article en vitrocéramique est refroidie avec un fluide de refroidissement (18) pendant l'action du rayonnement électromagnétique,

2. Procédé selon la revendication 1, **caractérisé en ce que** l'échauffement est réalisé avec un laser (9).

3. Procédé selon la revendication 2, **caractérisé en ce que**, à l'aide d'un scanneur au laser, la surface de l'article en vitrocéramique est balayée avec le faisceau laser, de manière à chauffer une zone dont la surface est plus grande que le point lumineux du faisceau laser sur la surface de l'article en vitrocéramique.

4. Procédé selon l'une des revendications 1 à 3, selon lequel on met à disposition un article en vitrocéramique teinté dans la masse avec de l'oxyde de vanadium, et selon lequel, dans la zone locale, la transmission, dans le domaine spectral visible compris entre 380 nanomètres et 780 nanomètres, est augmentée par réchauffement.

5. Procédé selon l'une des revendications 1 à 4, **caractérisé en ce que** la vitrocéramique est chauffée à une vitesse de variation de température d'au moins 250 K par minute.

6. Procédé selon l'une des revendications 1 à 5, **caractérisé en ce qu'**un dispositif, de préférence un support sur lequel est posé l'article en vitrocéramique, permet de renvoyer dans l'article en vitrocéramique le rayonnement électromagnétique qui est transmis à travers l'article en vitrocéramique.

7. Procédé selon l'une des revendications 1 à 6, **caractérisé en ce qu'**après le refroidissement, une étape de traitement thermique ultérieur est exécutée, notamment dans le but de réduire les contraintes de traction, l'étape de traitement thermique ultérieur comprenant de préférence au moins l'une des étapes suivantes :
- une deuxième étape de chauffage, au moyen d'un rayonnement électromagnétique ;
- réchauffage thermique et revenu dans un four.

8. Produit comportant un élément en vitrocéramique monolithique teinté dans la masse qui présente une première zone (15) dans laquelle la teinte se distingue d'une deuxième zone (16) adjacente, de sorte que le coefficient d'absorption de la première zone (15), et donc la transmission de lumière par la première zone (15), est différent du coefficient d'absorption, et donc de la transmission de lumière, d'une deuxième zone (16) adjacente, sachant que dans la première zone (15), la transmission spectrale, à l'intérieur de l'ensemble du domaine spectral compris entre 420 nanomètres et 780 nanomètres, est supérieure à celle d'une deuxième zone (16) adjacente, et sachant que la diffusion de la lumière dans la vitrocéramique de la première zone (15) est supérieure au maximum de 20 % absolus, de préférence au maximum de 10 % absolus, à la diffusion de lumière dans la vitrocéramique de la deuxième zone (16), **caractérisé en ce que**
- la première zone (15) est une fenêtre qui est entourée sur au moins trois côtés ou sur au moins 50 % de sa périphérie de deuxièmes zones adjacentes, non éclaircies.

9. Produit selon la revendication 8, dans lequel la vitrocéramique de l'article en vitrocéramique contient des ions d'au moins un des métaux suivants ou des combinaisons d'ions des métaux suivants :
- le vanadium, en particulier conjointement avec l'étain et/ou le titane,
- les terres rares, en particulier le cérium, de préférence conjointement avec le chrome et/ou le nickel et/ou le cobalt,
- le manganèse, de préférence conjointement avec l'étain et/ou le titane,
- le fer, de préférence conjointement avec l'étain et/ou le titane.

10. Produit selon la revendication 9, **caractérisé en ce qu'**il présente un élément en vitrocéramique, teinté dans la masse avec de l'oxyde de vanadium, dans lequel, dans la première zone (15), la transmission de lumière intégrale, dans le domaine spectral visible, est plus élevée que dans une deuxième zone (16) adjacente, et dans lequel la vitrocéramique contient en outre au moins 0,005 pour cent en poids d'oxyde de vanadium.

11. Produit selon l'une des revendications 8 à 10, **caractérisé en ce qu'**il comporte
- un élément en vitrocéramique teinté par diffusion, dans lequel la première zone (15) présente une transmission de lumière plus élevée dans le domaine spectral visible qu'une zone (16) adjacente, ou
- **en ce que** le coefficient d'absorption de la première zone (15), dans au moins un domaine spectral avec une longueur d'onde supérieure à 900 nanomètres, située de préférence dans la plage allant de 1 100 à 1 400 nanomètres, est supérieur au coefficient d'absorption d'une deuxième zone (16) adjacente, et que par conséquent la transmission de lumière intégrale de la première zone (15), dans le domaine spectral avec une longueur d'onde supérieure à 900 nanomètres, est inférieure à la transmission de lumière intégrale de la deuxième zone (16) adjacente dans ce domaine spectral.

12. Produit selon l'une des revendications 8 à 11, **caractérisé en ce que** la première zone (15) s'étend d'une première surface jusqu'à une deuxième surface opposée de l'élément en vitrocéramique.

13. Produit selon l'une des revendications 8 à 12, **caractérisé en ce que**
- la partie de surface de la première zone ou des premières zones (15), sur une face de la plaque de cuisson en vitrocéramique, occupe(nt) au total au maximum un tiers de la superficie de cette face.

14. Produit selon l'une des revendications 8 à 13, comprenant un élément vitrocéramique en aluminosilicate, **caractérisé en ce que** la première zone (15) présente une teneur plus élevée en cristal mixte de kéatite.

15. Produit selon l'une des revendications 8 à 14, **caractérisé en ce que** la réflexion spectrale de la première zone pour la lumière visible se distingue de la réflexion spectrale de la deuxième zone au maximum de 20 % absolus, de préférence au maximum de 10 % absolus, et de façon particulièrement avantageuse au maximum de 5 % absolus, et dans lequel, de manière facultative, la transmission dans le domaine spectral visible de la première zone est augmentée au moins d'un facteur 2 par rapport à la deuxième zone adjacente.

16. Produit selon l'une des revendications 8 à 15, **caractérisé en ce que** dans la première zone (15), la tension à la surface est plus élevée qu'au centre du volume de la première zone (15).

17. Produit selon l'une des revendications précédentes, comprenant un élément vitrocéramique dont l'épaisseur varie le long d'au moins une partie de la surface, et dans lequel le coefficient d'absorption varie localement en fonction de l'épaisseur.

18. Plaque de cuisson en vitrocéramique (20) comprenant un produit selon l'une des revendications précédentes, sous la forme d'une plaque en vitrocéramique (1), la plaque en vitrocéramique (1) présentant une première zone (15) qui s'étend à travers la plaque en vitrocéramique, d'une surface jusqu'à la surface opposée des deux faces (3, 5), et dans laquelle la transmission de lumière est accrue par rapport à des zones (16) adjacentes, et sachant que sous la première zone, il est prévu un dispositif d'affichage, de préférence luminescent, dont la lumière est visible à travers la première zone (15).
